# FASCICULE DE BREVET EUROPEEN

(11) **EP 3 727 889 B1**
(45) Date de publication et mention de la délivrance du brevet: **22.06.2022**
(21) Numéro de dépôt: 18833484.1
(22) Date de dépôt: 13.12.2018
(51) Int. Cl.: B60C 9/22, B60C 9/00, B60C 9/20

(54) **PNEUMATIQUE COMPRENANT UNE NAPPE DE FRETTAGE PERFECTIONNÉE**
LUFTREIFEN MIT EINER VERBESSERTEN VERSTÄRKUNGSLAGE
PNEUMATIC TYRE COMPRISING AN IMPROVED BRACING PLY

(30) Priorité: 22.12.2017 FR 1763122
(43) Date de publication de la demande: 28.10.2020
(73) Titulaire: COMPAGNIE GENERALE DES ETABLISSEMENTS MICHELIN, 63000 Clermont-Ferrand (FR)
(72) Inventeur: RIH, Sabrina, 63040 CLERMONT-FERRAND CEDEX 9 (FR); CORNILLE, Richard, 63040 CLERMONT-FERRAND CEDEX 9 (FR); FERIGO, Hervé, 63040 CLERMONT-FERRAND CEDEX 9 (FR)
(74) Mandataire: Louret, Sylvain
(86) Numéro de dépôt international: PCT/FR2018/053268
(87) Numéro de publication internationale: WO 2019/122619

(56) Documents cités:
- EP-A1- 1 431 076
- EP-A2- 1 800 901
- WO-A1-03/060212
- WO-A1-2016/023656
- WO-A1-2016/166056

## Description

L'invention concerne les pneumatiques et préférentiellement ceux pour véhicules de tourisme, mais peut être utilisée sur tout autre type de véhicule tels que des véhicules à deux roues, des véhicules poids lourds, agricoles, de génie civil ou des avions ou, plus généralement, sur tout dispositif roulant. Par pneumatique, on entend un bandage destiné à former une cavité en coopérant avec un élément support, par exemple une jante, cette cavité étant apte à être pressurisée à une pression supérieure à la pression atmosphérique. Un pneumatique selon l'invention présente une structure de forme sensiblement toroïdale.

On connait de l'état de la technique des pneumatiques comprenant un sommet et deux flancs. Ces pneumatiques comprennent classiquement une armature de carcasse ancrée dans deux bourrelets et surmontée radialement par une armature de sommet elle-même surmontée radialement d'une bande de roulement, l'armature de sommet étant réunie auxdits bourrelets par les deux flancs. L'armature de carcasse comprend une unique nappe de carcasse comprenant des éléments filaires de renfort de carcasse. L'armature de sommet comprend une armature de travail comprenant deux nappes de travail comprenant des éléments filaires de renfort de travail, les éléments filaires de renfort de travail des deux nappes faisant des angles avec la direction circonférentielle du pneumatique d'orientations opposées d'une nappe de travail à l'autre. L'armature de sommet comprend également une armature de frettage comprenant une unique nappe de frettage comprenant des éléments filaires textiles de renfort de frettage.

Les éléments filaires de renfort de carcasse et de travail sont agencés de façon à définir, dans le sommet, un maillage triangulaire.

D'une part, l'armature de frettage doit permettre, grâce à des propriétés à cuit de résistance mécanique adaptées, d'exercer une force de frettage suffisante du sommet du pneumatique, notamment lors du roulage à des vitesses élevées afin de garantir le maintien du profil du pneumatique. D'autre part, l'armature de frettage doit permettre, grâce à des propriétés à cru de module en traction adaptées, une expansion radiale et donc, un allongement circonférentiel, du sommet du pneumatique de façon à ne pas empêcher les déformations radiales et circonférentielles imposées au pneumatique lors de son procédé de fabrication, notamment lors de la cuisson du pneumatique durant laquelle le pneumatique est expansé radialement et circonférentiellement, par exemple par mise sous pression d'une membrane de gonflage, de façon à être plaqué contre les surfaces du moule de cuisson.

Un tel pneumatique est notamment décrit dans US6799618. Du fait de la présence de deux nappes de travail, les éléments filaires textiles de renfort de frettage présentent des propriétés mécaniques, notamment un module tangent, relativement faibles aussi bien à cru avant l'étape de fabrication de la nappe de frettage qu'à cuit une fois extrait du pneumatique, et ce, quel que soit l'allongement imposé. Ainsi, la nappe de frettage de US6799618 garantit la possibilité de déformer radialement et circonférentiellement le pneumatique lors de son procédé de fabrication mais en sacrifiant les propriétés mécaniques de la nappe de frettage et donc de l'armature de sommet.

D'autres pneumatiques connus sont décrits dans EP 1431076, EP 1800901, WO 2016023656 et WO 03060212.

On connait de WO2016/166056 un pneumatique dans lequel l'armature de travail comprend une unique nappe de travail. Ainsi, on allège l'armature de sommet du pneumatique. Dans ce pneumatique, le maillage triangulaire est assuré par l'agencement particulier, dans le sommet, des éléments filaires de renfort de carcasse, de travail et de frettage. Dans WO2016/166056, du fait de la suppression d'une nappe de travail, la nappe de frettage comprend des éléments filaires textiles de renfort de frettage présentant un module tangent relativement élevé, que ce soit à cru avant l'étape de fabrication de la nappe de frettage ou bien à cuit une fois extrait du pneumatique, et ce afin de compenser la suppression d'une des nappes de travail. Ainsi, de tels éléments filaires textiles de renfort de frettage, s'ils assurent les propriétés de résistance mécanique du sommet, ne permettent pas des déformations radiale et circonférentielle aisées du pneumatique lors de son procédé de fabrication, ce qui engendre un risque de pénétration des éléments filaires textiles de renfort de frettage dans la nappe radialement intérieure à la nappe de frettage et un risque de variation de la géométrie obtenue du pneumatique par rapport à la géométrie attendue du pneumatique.

L'invention a pour but un pneumatique comprenant une nappe de frettage permettant un allègement de l'armature de sommet du pneumatique et garantissant, d'une part, des propriétés de résistance mécanique suffisantes et d'autre part, une déformation axiale et circonférentielle aisée du pneumatique lors de son procédé de fabrication.

A cet effet, l'invention a pour objet un pneumatique, tel que défini dans la revendication 1, comprenant une armature de sommet comprenant une armature de frettage comprenant une nappe de frettage comprenant au moins un élément filaire textile de renfort de frettage faisant un angle strictement inférieur à 10° avec la direction circonférentielle du pneumatique. Le pneumatique est obtenu par un procédé comprenant une étape de fabrication de la nappe de frettage dans laquelle on noie au moins un élément filaire textile de renfort adhérisé dans une composition pour former le ou chaque élément filaire textile de renfort de frettage.

Conformément à l'invention, le ou chaque élément filaire textile de renfort adhérisé présente, avant l'étape de fabrication de la nappe de frettage, un module tangent inférieur ou égal à 5 cN/tex/% pour tout allongement inférieur ou égal à 3 % et, le ou chaque élément filaire textile de renfort de frettage présente, une fois extrait du pneumatique, un module tangent supérieur ou égal à 5 cN/tex/% pour tout allongement supérieur ou égal à 4 %.

Grâce aux propriétés définies ci-dessus, le ou chaque élément filaire textile de renfort adhérisé présente, avant l'étape de fabrication de la nappe de frettage, une courbe force-allongement présentant un module relativement faible aux petits allongements et, après la fabrication du pneumatique, l'élément filaire textile de renfort de frettage présente un module relativement élevé dès des petits allongements.

D'une part, un tel élément filaire textile de renfort permet, grâce à un module tangent relativement faible du ou des éléments filaires textiles adhérisé à cru, c'est-à-dire avant l'étape de fabrication de la nappe de frettage, une déformation radiale et circonférentielle aisée du pneumatique lors de son procédé de fabrication. D'autre part, un tel pneumatique permet, grâce à un module tangent relativement élevé du ou des éléments filaires textiles de frettage à cuit, c'est-à-dire après la fabrication du pneumatique, d'obtenir une armature de frettage suffisamment robuste mécaniquement et donc d'alléger l'armature de sommet du pneumatique sans risquer de dégrader les performances du pneumatique. L'armature de sommet pourrait ainsi être allégée en diminuant, par exemple, le nombre, la force à rupture ou encore la taille des éléments de renfort de l'armature de travail. Une solution particulièrement avantageuse sera décrite ci-dessous et consiste à supprimer une nappe de travail de l'armature de sommet.

Par filaire, on entend un élément de renfort s'étendant longitudinalement selon un axe principal et présentant une section perpendiculaire à l'axe principal dont la plus grande dimension D est relativement faible par rapport à la dimension L selon l'axe principal. Par relativement faible, on entend que L/D est supérieur ou égal à 100, de préférence supérieur ou égal à 1000. Cette définition couvre aussi bien les éléments de renfort filaires de section circulaire que les éléments de renfort filaires de section non circulaire, par exemple de section polygonale ou oblongue. Dans le cas d'éléments de renfort filaires de section non circulaire, le rapport de la plus grande dimension D de la section sur la plus petite dimension d de la section est supérieur ou égal à 20, de préférence supérieur ou égal à 30 et plus préférentiellement supérieur ou égal à 50.

Par textile, on entend que l'élément filaire n'est pas métallique. En d'autres termes, l'élément filaire est constitué d'un ou de plusieurs matériaux non métalliques, Des exemples de tels matériaux non métalliques sont les matériaux organiques, notamment les matériaux polymériques, et les matériaux minéraux telles que le carbone ou le verre.

Dans la description et les revendications, tout intervalle de valeurs désigné par l'expression « entre a et b » représente le domaine de valeurs allant de plus de a à moins de b (c'est-à-dire bornes a et b exclues) tandis que tout intervalle de valeurs désigné par l'expression « de a à b » signifie le domaine de valeurs allant de la borne « a » jusqu'à la borne « b » c'est-à-dire incluant les bornes strictes « a » et « b ».

Par l'expression "partie en poids pour cent parties en poids d'élastomère" (ou pce), il faut entendre au sens de la présente invention, la partie, en masse pour cent parties en masse d'élastomère.

Par direction axiale, on entend la direction sensiblement parallèle à l'axe de rotation du pneumatique.

Par direction circonférentielle, on entend la direction qui est sensiblement perpendiculaire à la fois à la direction axiale et à un rayon du pneumatique (en d'autres termes, tangente à un cercle dont le centre est sur l'axe de rotation du pneumatique).

Par direction radiale, on entend la direction selon un rayon du pneumatique, c'est-à-dire une direction quelconque intersectant l'axe de rotation du pneumatique et sensiblement perpendiculairement à cet axe.

Par plan médian (noté M), on entend le plan perpendiculaire à l'axe de rotation du pneumatique qui est situé à mi-distance des deux bourrelets et passe par le milieu de l'armature de sommet.

Par plan circonférentiel équatorial (noté E), on entend le plan théorique passant par l'équateur du pneumatique, perpendiculaire au plan médian et à la direction radiale. L'équateur du pneumatique est, dans un plan de coupe circonférentielle (plan perpendiculaire à la direction circonférentielle et parallèle aux directions radiale et axiales) l'axe parallèle à l'axe de rotation du pneumatique et située à équidistance entre le point radialement le plus externe de la bande de roulement destiné à être au contact avec le sol et le point radialement le plus interne du pneumatique destiné à être en contact avec un support, par exemple une jante, la distance entre ces deux points étant égale à H.

Les mesures des torsions N1, N1' et N2 peuvent être réalisées par toute méthode connue par l'homme du métier, par exemple conformément à la norme ASTM D 885/D 885M - 10a de 2014 (paragraphe 30), par exemple à l'aide d'un torsiomètre.

Le titre (ou densité linéique) de chaque brin est déterminé selon la norme ASTM D 885/D 885M - 10a de 2014. Le titre est donné en tex (poids en grammes de 1000 m de produit - rappel: 0, 111 tex égal à 1 denier).

Le module tangent, exprimé en cN/tex/% est calculé à partir d'une courbe force-allongement obtenue en appliquant la norme ASTM D 885/D 885M - 10a de 2014. De cette courbe force-allongement, on déduit le module tangent en calculant la dérivée de la courbe en chaque point. Dans le cas de l'élément filaire textile de renfort adhérisé, le module tangent est mesuré directement avant l'étape de noyage de l'élément filaire textile de renfort de frettage dans la nappe de frettage, c'est-à-dire sans qu'aucune autre étape ne modifiant les propriétés de module tangent n'ait lieu entre sa dernière étape de traitement thermique et l'étape de noyage. Le module tangent mesuré avant l'étape de fabrication de la nappe de frettage est ainsi mesuré postérieurement à une ou plusieurs étapes de revêtement d'un élément filaire textile de renfort écru par une ou plusieurs couches d'une ou plusieurs compositions adhésives thermoréticulables et postérieurement à une ou plusieurs étapes de traitement thermiquement de l'élément filaire textile de renfort écru revêtu d'une ou plusieurs couches de façon à réticuler la ou les compositions adhésives pour obtenir l'élément filaire textile de renfort adhérisé.

Un élément filaire textile écru est tel que le ou les matériaux textiles constituants l'élément filaire textile sont issus de fabrication sans qu'aucun revêtement ayant une fonction d'adhésion ne vienne recouvrir ce ou ces matériaux. Ainsi, un élément filaire textile écru peut être nu, c'est-à-dire que le ou les matériaux textiles constituants l'élément filaire textile ne sont revêtus d'aucun revêtement ou bien éventuellement être ensimé, c'est-à-dire revêtu d'une composition d'ensimage ayant notamment pour fonctions de faciliter le glissement du ou des matériaux textiles constituants l'élément filaire textile lors de son procédé de fabrication et d'éviter l'accumulation des charges électrostatiques.

Ainsi, dans un premier mode de réalisation, on assemble le premier brin de l'âme et les deuxièmes brins de la couche de façon à former l'élément filaire textile de renfort écru, on revêt l'élément filaire textile de renfort écru d'une couche externe d'une composition adhésive thermoréticulable et on traite thermiquement l'élément filaire textile de renfort écru revêtu de la couche externe de façon à réticuler la composition adhésive pour obtenir l'élément filaire textile de renfort adhérisé.

Dans un deuxième mode de réalisation, on revêt l'élément filaire textile de renfort écru d'une couche intermédiaire d'une première composition adhésive thermoréticulable, on traite thermiquement l'élément filaire textile de renfort écru revêtu de la couche intermédiaire de façon à réticuler la première composition adhésive pour obtenir un élément filaire textile de renfort pré-adhérisé, on revêt l'élément filaire textile de renfort pré-adhérisé d'une couche externe d'une deuxième composition adhésive thermoréticulable et on traite thermiquement l'élément filaire textile de renfort pré-adhérisé revêtu de la couche externe de façon à réticuler la deuxième composition adhésive pour obtenir l'élément filaire textile de renfort adhérisé.

L'allongement à rupture et la force à rupture d'un élément filaire textile sont mesurés selon la norme ASTM D 885/D 885M - 10a de 2014. L'allongement à rupture d'une nappe est égal à l'allongement à rupture des éléments filaires textiles qu'elle comprend.

Par nappe, on entend l'assemblage, d'une part, d'un ou de plusieurs éléments filaires de renfort et, d'autre part, d'une matrice élastomérique, le ou les éléments filaires de renfort étant noyés dans la matrice élastomérique.

Le module sécant en traction d'une nappe pour une force égale à 15% de la force à rupture est notée MA₁₅ et est exprimé en daN/mm. On calcule le module MA₁₅ à partir d'une courbe force-allongement obtenue en appliquant la normeASTM D 885/D 885M - 10a de 2014 à un élément filaire textile de renfort de la nappe. On calcule le module sécant en traction de l'élément filaire textile de renfort en déterminant la pente de la droite tracée entre les points (0,0) et le point de la courbe présentant une ordonnée égale à 15% de la force à rupture. On détermine le module MA₁₅ en multipliant le module sécant en traction de l'élément filaire textile de renfort par le nombre d'éléments filaires textiles de renfort par mm de nappe, ce nombre étant déterminé selon une direction perpendiculaire à la direction selon laquelle les éléments filaires textiles de renfort s'étendent dans la nappe.

On calcule la force à rupture d'une nappe à partir d'une courbe force-allongement obtenue en appliquant la norme ASTM D 885/D 885M - 10a de 2014 à un élément filaire textile de renfort de la nappe. On détermine la force à rupture de la nappe en multipliant la force à rupture de l'élément filaire textile de renfort par le nombre d'éléments filaires textiles de renfort par mm de nappe, ce nombre étant déterminé selon une direction perpendiculaire à la direction selon laquelle les éléments filaires textiles de renfort s'étendent dans la nappe.

Par orientation d'un angle, on entend le sens, horaire ou anti-horaire, dans lequel il faut tourner à partir d'une droite de référence, ici la direction circonférentielle du pneumatique, définissant l'angle pour atteindre l'autre droite définissant l'angle.

On calcule la raideur en traction à 1% d'allongement d'un brin à partir d'une courbe force-allongement obtenue en appliquant la norme ASTM D 885/D 885M - 10a de 2014 au brin auquel on applique une torsion de 100 tours/mètre. On calcule la raideur en traction du brin en déterminant la pente de la droite tracée entre le point de la courbe correspondant une force égale à la prétension standard de 0,5 cN/tex et le point de la courbe présentant une abscisse égale à 1 % d'allongement.

Avantageusement, l'armature de frettage comprend une unique nappe de frettage. Avantageusement, l'armature de frettage comprend une unique nappe de frettage. Ainsi, l'armature de frettage est, à l'exception de la nappe de frettage, dépourvue de toute nappe renforcée par des éléments de renfort filaires. Les éléments de renfort filaires de telles nappes renforcées exclues de l'armature de frettage du pneumatique comprennent les éléments de renfort filaires métalliques et les éléments de renfort filaires textiles. De façon très préférentielle, l'armature de frettage est constituée par une nappe de frettage.

Dans des modes de réalisation préférés, le ou chaque élément filaire textile de renfort de frettage fait un angle inférieur ou égal à 7°, et plus préférentiellement inférieur ou égal à 5° avec la direction circonférentielle du pneumatique.

Dans un premier mode de réalisation, la nappe de frettage présente avantageusement un module sécant en traction supérieur ou égal à 200 daN/mm pour une force égale à 15% de la force à rupture de la nappe de frettage. Dans un deuxième mode de réalisation, la nappe de frettage présente avantageusement un module sécant en traction supérieur ou égal à 500 daN/mm pour une force égale à 15% de la force à rupture de la nappe de frettage.

Dans le premier mode de réalisation, la nappe de frettage présente avantageusement un module sécant en traction inférieur ou égal à 500 daN/mm pour une force égale à 15% de la force à rupture de la nappe de frettage. Dans le deuxième mode de réalisation, la nappe de frettage présente avantageusement un module sécant en traction inférieur ou égal à 800 daN/mm pour une force égale à 15% de la de la force à rupture de la nappe de frettage.

Avantageusement, la force à rupture de la nappe de frettage est supérieure ou égale à 35 daN/mm, de préférence supérieure ou égale à 45 daN/mm et plus préférentiellement supérieure ou égale à 55 daN/mm. Dans le deuxième mode de réalisation, la force à rupture de la nappe de frettage est avantageusement supérieure ou égale 60 daN/mm, de préférence supérieure ou égale à 70 daN/mm.

Avantageusement, le ou chaque élément filaire textile de renfort adhérisé présente, avant l'étape de fabrication de la nappe de frettage, un module tangent inférieur ou égal à 3 cN/tex/% pour tout allongement inférieur ou égal à 2 %.

Avantageusement, le ou chaque élément filaire textile de renfort adhérisé présente, avant l'étape de fabrication de la nappe de frettage, un module tangent inférieur ou égal à 10 cN/tex/% pour tout allongement inférieur ou égal à 5 %.

Avantageusement, le ou chaque élément filaire textile de renfort adhérisé présente, avant l'étape de fabrication de la nappe de frettage, un module tangent inférieur ou égal à 15 cN/tex/% pour tout allongement inférieur ou égal à 6 %.

Grâce aux propriétés définies ci-dessus, le ou chaque élément filaire textile de renfort adhérisé présente, avant l'étape de fabrication de la nappe de frettage, une courbe force-allongement présentant un module relativement faible aux petits allongements. Un tel pneumatique permet, grâce à un module tangent relativement faible du ou des éléments filaires textiles adhérisé à cru, c'est-à-dire avant l'étape de fabrication de la nappe de frettage, une déformation radiale et circonférentielle aisée du pneumatique lors de son procédé de fabrication.

Avantageusement, le ou chaque élément filaire textile de renfort de frettage présente, une fois extrait du pneumatique, un module tangent supérieur ou égal à 5 cN/tex/% pour tout allongement supérieur ou égal à 3,5 %, de préférence supérieur ou égal à 3 % et plus préférentiellement supérieur ou égal à 2 %. Ainsi, l'armature de frettage présente un module élevé pour des allongements très faibles et permet de reprendre très rapidement des efforts importants. Cela permet d'alléger d'autant plus le reste de l'armature de sommet du pneumatique, notamment grâce aux moyens décrits précédemment.

Avantageusement, le ou chaque élément filaire textile de renfort de frettage présente, une fois extrait du pneumatique, un module tangent supérieur ou égal à 10 cN/tex/% pour tout allongement supérieur ou égal à 6 %, de préférence supérieur ou égal à 5 % et plus préférentiellement supérieur ou égal à 4 %.

Avantageusement, le ou chaque élément filaire textile de renfort de frettage présente, une fois extrait du pneumatique, un module tangent supérieur ou égal à 15 cN/tex/% pour tout allongement supérieur ou égal à 8 %, de préférence supérieur ou égal à 7 % et plus préférentiellement supérieur ou égal à 6 %.

Avantageusement, le ou chaque élément filaire textile de renfort de frettage présente, une fois extrait du pneumatique, un module tangent supérieur ou égal à 20 cN/tex/% pour tout allongement supérieur ou égal à 8 %.

De façon analogue, pour des allongements plus importants, l'armature de frettage présente un module relativement élevé, voire très élevé, permettant d'alléger sereinement l'armature de sommet du pneumatique sans risquer d'en détériorer les propriétés mécaniques.

Avantageusement, le ou chaque élément filaire textile de renfort de frettage présente, une fois extrait du pneumatique, un allongement à rupture supérieur ou égal à 6 %, de préférence supérieur ou égal à 7 % et plus préférentiellement supérieur ou égal à 8 %. Ainsi, le ou chaque élément filaire textile de renfort de frettage présente un allongement à rupture suffisamment élevé pour absorber les déformations subies par l'armature de sommet lors du roulage du pneumatique, même dans des conditions sévères. De façon analogue, la nappe de frettage présente, une fois extraite du pneumatique, un allongement à rupture supérieur ou égal à 6 %, de préférence supérieur ou égal à 7 % et plus préférentiellement supérieur ou égal à 8 %.

Avantageusement, le ou chaque élément filaire textile de renfort adhérisé présente, avant l'étape de fabrication de la nappe de frettage, un allongement à rupture supérieur ou égal à 10 %.

On va maintenant décrire deux modes de réalisation préférés de l'invention. Dans un premier mode de réalisation, on maximise la déformabilité de l'élément filaire textile adhérisé et donc on maximise la déformabilité radiale et circonférentielle du pneumatique lors de son procédé de fabrication. Dans un deuxième mode de réalisation, on favorise la déformabilité dans le compromis entre déformabilité et module et donc on favorise la déformabilité radiale et circonférentielle du pneumatique lors de son procédé de fabrication dans le compromis entre déformabilité radiale et circonférentielle du pneumatique et résistance mécanique du sommet.

### Premier mode de réalisation de l'invention

Avantageusement, le ou chaque élément filaire textile de renfort adhérisé présente, avant l'étape de fabrication de la nappe de frettage, un module tangent inférieur ou égal à 3 cN/tex/% pour tout allongement inférieur ou égal à 6 %, de préférence pour tout allongement inférieur ou égal à 7 %, plus préférentiellement pour tout allongement inférieur ou égal à 8 % et encore plus préférentiellement pour tout allongement inférieur ou égal à 9 %.

Avantageusement, le ou chaque élément filaire textile de renfort adhérisé présente, avant l'étape de fabrication de la nappe de frettage, un module tangent inférieur ou égal à 5 cN/tex/% pour tout allongement inférieur ou égal à 7,5 %, de préférence pour tout allongement inférieur ou égal à 8,5 %, plus préférentiellement pour tout allongement inférieur ou égal à 9,5 % et encore plus préférentiellement pour tout allongement inférieur ou égal à 10,5 %.

Avantageusement, le ou chaque élément filaire textile de renfort adhérisé présente, avant l'étape de fabrication de la nappe de frettage, un module tangent inférieur ou égal à 10 cN/tex/% pour tout allongement inférieur ou égal à 10 %, de préférence pour tout allongement inférieur ou égal à 11 %, plus préférentiellement pour tout allongement inférieur ou égal à 12 % et encore plus préférentiellement pour tout allongement inférieur ou égal à 13 %.

Avantageusement, le ou chaque élément filaire textile de renfort adhérisé présente, avant l'étape de fabrication de la nappe de frettage, un module tangent inférieur ou égal à 15 cN/tex/% pour tout allongement inférieur ou égal à 12 %, de préférence pour tout allongement inférieur ou égal à 13 %, plus préférentiellement pour tout allongement inférieur ou égal à 14 % et encore plus préférentiellement pour tout allongement inférieur ou égal à 15 %.

Sur une plage relativement grande d'allongements, l'élément filaire textile de renfort adhérisé présente un module tangent relativement faible permettant une déformation radiale et circonférentielle aisée du pneumatique lors de son procédé de fabrication. Ainsi, pour une plage relativement grande d'allongements, l'élément filaire textile de renfort adhérisé et donc la nappe de frettage, développent un effort relativement faible, ce qui réduit, lors de la mise en tension de l'élément filaire textile de renfort de frettage, les risques de pénétration du ou de chaque élément filaire textile de renfort de frettage dans les nappes qui sont radialement intérieures à l'armature de frettage et les risques de variation de la géométrie obtenue du pneumatique par rapport à la géométrie attendue du pneumatique. Ainsi, avantageusement, si on le désire, on peut réduire la pression appliquée à l'intérieure du pneumatique lors de la cuisson.

Avantageusement, le ou chaque élément filaire textile de renfort adhérisé présente, avant l'étape de fabrication de la nappe de frettage, un allongement à rupture supérieur ou égal à 14 %, de préférence supérieur ou égal à 15 %, plus préférentiellement supérieur ou égal à 16 % et encore plus préférentiellement supérieur ou égal à 17 %.

### Deuxième mode de réalisation de l'invention

Avantageusement, le ou chaque élément filaire textile de renfort adhérisé présente, avant l'étape de fabrication de la nappe de frettage, un module tangent supérieur ou égal à 3 cN/tex/% pour tout allongement supérieur ou égal à 6 %, de préférence pour tout allongement supérieur ou égal à 5 %, plus préférentiellement pour tout allongement supérieur ou égal à 4 % et encore plus préférentiellement pour tout allongement supérieur ou égal à 3 %.

Avantageusement, le ou chaque élément filaire textile de renfort adhérisé présente, avant l'étape de fabrication de la nappe de frettage, un module tangent supérieur ou égal à 5 cN/tex/% pour tout allongement supérieur ou égal à 7,5 %, de préférence pour tout allongement supérieur ou égal à 6,5 %, plus préférentiellement pour tout allongement supérieur ou égal à 5,5 % et encore plus préférentiellement pour tout allongement supérieur ou égal à 4,5 %.

Avantageusement, le ou chaque élément filaire textile de renfort adhérisé présente, avant l'étape de fabrication de la nappe de frettage, un module tangent supérieur ou égal à 10 cN/tex/% pour tout allongement supérieur ou égal à 10 %, de préférence pour tout allongement supérieur ou égal à 8,5 %, plus préférentiellement pour tout allongement supérieur ou égal à 7,5 % et encore plus préférentiellement pour tout allongement supérieur ou égal à 6,5 %.

Avantageusement, le ou chaque élément filaire textile de renfort adhérisé présente, avant l'étape de fabrication de la nappe de frettage, un module tangent supérieur ou égal à 15 cN/tex/% pour tout allongement supérieur ou égal à 12 %, de préférence pour tout allongement supérieur ou égal à 10,5 %, plus préférentiellement pour tout allongement supérieur ou égal à 9 % et encore plus préférentiellement pour tout allongement supérieur ou égal à 7,5 %.

Le module de chaque élément filaire textile de renfort adhérisé étant relativement élevé lors du procédé de fabrication du pneumatique, on limite les risques d'effondrement du sommet du pneumatique lors de sa manipulation. En effet, le module relativement élevé confère une rigidité largement suffisante à l'armature de sommet du pneumatique pour supporter, à l'état cru, son propre poids ainsi que celui de la bande de roulement, et ainsi réduire les risques d'effondrement radial du sommet sur lui-même. Néanmoins, cette rigidité est suffisamment faible pour permettre une déformabilité radiale et circonférentielle du pneumatique.

Enfin, comme lors du procédé de fabrication du pneumatique, l'allongement de chaque élément filaire textile de renfort adhérisé est partiellement consommé, le module de chaque élément filaire textile de renfort de frettage une fois extrait du pneumatique pour des allongements relativement faibles correspond au module de chaque élément filaire textile de renfort adhérisé avant l'étape de fabrication de la nappe de frettage pour des allongements plus élevés. En conséquence, le module de chaque élément filaire textile de renfort de frettage une fois extrait du pneumatique est relativement élevé, ce qui entraine également une force à rupture relativement élevée, au point de garantir de bonnes propriétés de résistance mécanique de la nappe de frettage.

Avantageusement, le ou chaque élément filaire textile de renfort adhérisé présente, avant l'étape de fabrication de la nappe de frettage, un allongement à rupture inférieur ou égal à 14 %, de préférence inférieur ou égal à 13 %, plus préférentiellement inférieur ou égal à 12 % et encore plus préférentiellement inférieur ou égal à 11 %.

Selon l'invention, le ou chaque élément filaire textile de renfort de frettage comprend :
- une âme constituée d'un premier brin comprenant au moins un monofilament, et
- une couche comprenant au moins deux deuxièmes brins, chaque deuxième brin de la couche comprenant au moins un monofilament, chaque deuxième brin de la couche étant enroulé en hélice autour de l'âme.

Un tel élément filaire textile de renfort de frettage est couramment désigné par les termes anglais « Core Insertion ». Ainsi, l'âme centrale est insérée au milieu des deuxièmes brins de la couche qui lui sont donc périphériques et adjacents. Chaque deuxième brin de la couche est enroulé autour de l'âme sans être enroulé autour du ou des autres deuxièmes brins de la couche.

Une telle structure de l'élément filaire textile de renfort de frettage permet d'obtenir les propriétés mécaniques désirées de l'élément filaire textile de renfort de frettage avant l'étape de fabrication de la nappe et une fois extrait du pneumatique. En effet, lorsque l'élément filaire textile de renfort de frettage est sollicité aux faibles allongements, le module de l'élément filaire textile de renfort de frettage reste relativement faible, ce dernier étant alors gouverné par l'âme constitué d'un seul premier brin. Les deuxièmes brins de la couche étant enroulés en hélice, ceux-ci ne contribuent pas à augmenter la valeur du module aux faibles allongements car l'effort est absorbé par la déformation géométrique de l'hélice. Lorsque l'élément filaire textile de renfort de frettage est sollicité à de plus grands allongements, l'hélice des deuxièmes brins de la couche ayant été consommée au moins en partie par l'allongement, ceux-ci contribuent fortement à l'augmentation du module en plus de la contribution de l'âme.

D'autre part, une telle structure de l'élément filaire textile de renfort de frettage permet d'obtenir une endurance bien supérieure à celle d'un élément filaire textile hybride classique tel que décrit dans WO2016/166056. En effet, l'élément filaire textile de type « Core insertion » tel que décrit ci-dessus présente une excellente endurance. Les inventeurs émettent l'hypothèse que, lors de la mise en compression d'un élément filaire textile hybride classique tel que décrit dans WO2016/166056, les monofilaments d'aramide s'endommagent et voient leur force à rupture diminuer de sorte que, sous l'effet des sollicitations répétées, notamment lors d'une mise en tension ultérieure, on augmente significativement le risque de rupture par rapport à avant leur mise en compression. Lors de la mise en compression d'un élément filaire textile type « Core Insertion » tel que décrit ci-dessus, le ou les monofilaments qui subissent le plus de compression sont ceux de l'âme, monofilaments qui, s'ils sont judicieusement choisis, présentent une structure moléculaire moins orientée leur conférant une bonne résistance aux sollicitations en compression. De plus, lors d'une mise en compression d'un élément filaire textile type « Core Insertion » tel que décrit ci-dessus, le ou les monofilaments des brins de couche disposent de davantage de degrés de liberté par rapport aux monofilaments d'aramide d'un élément filaire textile hybride classique tel que décrit dans WO2016/166056. Ainsi, le ou les monofilaments des brins de couche s'agencent de façon à s'adapter à la sollicitation mécanique, de sorte qu'ils s'endommagent moins et conservent une force à rupture plus élevée, leur permettant de casser moins facilement sous l'effet des sollicitations répétées de l'élément filaire textile.

De préférence, la somme des raideurs en traction à 1% d'allongement des deuxièmes brins, désignée Sc, est supérieure à la raideur en traction à 1% d'allongement du premier brin, désignée Sa, de préférence Sc/Sa ≥ 10, plus préférentiellement Sc/Sa ≥ 50 et encore plus préférentiellement Sc/Sa ≥ 100. Comme la raideur de la couche est relativement élevée, l'élément filaire textile de renfort de frettage présente alors une raideur significativement plus élevée aux grands allongements qu'aux faibles allongements.

Dans ce mode de réalisation, et ceux qui suivent, on peut obtenir un comportement bi-module adapté de la courbe force-allongement de l'élément filaire textile de renfort grâce à un choix judicieux de raideurs et donc de modules des premier et deuxième brins, la différence de raideurs et donc de modules entre l'âme et la couche étant exacerbée par la structure « Core Insertion » comme expliqué ci-dessus.

Avantageusement, le premier brin présente un module sécant en traction à 1% d'allongement inférieur ou égal à 2500 cN/tex, de préférence inférieur ou égal à 900 cN/tex et plus préférentiellement inférieur ou égal à 500 cN/tex.

Avantageusement, chaque deuxième brin présente un module sécant en traction à 1% d'allongement supérieur ou égal à 500 cN/tex, de préférence supérieur ou égal à 1000 cN/tex et plus préférentiellement supérieur ou égal à 2200 cN/tex.

Ainsi, l'élément filaire textile de renfort de frettage présente une courbe force-allongement présentant un module relativement faible aux petits allongements et un module relativement élevé aux grands allongements grâce aux modules en traction relativement différents des premier et deuxième brins.

Dans un mode de réalisation, le premier brin comprend un unique monofilament. Dans un mode de réalisation préféré, le premier brin est un brin multifilamentaire comprenant plusieurs monofilaments.

Dans un mode de réalisation, chaque deuxième brin comprend un unique monofilament. Dans un mode de réalisation préféré, chaque deuxième brin est un brin multifilamentaire comprenant plusieurs monofilaments.

Un monofilament est réalisé dans un matériau donné et désigne un filament monolithique issu, par exemple du filage de ce matériau, par exemple par filage au fondu, filage en solution ou filage de gel.

Dans le cas d'un brin comprenant un unique monofilament, le monofilament présente typiquement un diamètre allant de 0,03 mm à 0,50 mm.

Dans le cas d'un brin multifilamentaire comprenant plusieurs monofilaments, les monofilaments présentent typiquement des diamètres allant de 2 à 30 µm. Chaque brin multifilamentaire de monofilaments comprend au moins 2 filaments élémentaires, typiquement plus de 10 filaments élémentaires, de préférence plus de 100 filaments élémentaires et plus préférentiellement plus de 500 filaments élémentaires.

Dans les modes de réalisation décrits ci-dessus, chaque monofilament peut être réalisé à partir d'une ou plusieurs matières afin de former un filament monolithique. De préférence et pour des raisons de coût industriels, chaque monofilament est réalisé dans une unique matière textile.

Dans un mode de réalisation avantageux, le ou les monofilaments du premier brin est ou sont réalisés dans un matériau choisi parmi les polyesters, les polyamides aliphatiques, les celluloses et les mélanges de monofilaments de ces matériaux, de préférence réalisés dans un matériau choisi parmi les polyamides aliphatiques et plus préférentiellement réalisés en nylon 6.6. Les polyamides aliphatiques et notamment le nylon 6.6 présentent une structure moléculaire peu orientée leur conférant une bonne résistance aux sollicitations en compression, qualité recherchée pour l'âme de l'élément filaire textile de renfort de frettage, notamment pour améliorer son endurance.

Dans un mode de réalisation avantageux, le ou les monofilaments de chaque deuxième brin est ou sont réalisés dans un matériau choisi parmi les polyamides aromatiques, les copolyamides aromatiques, les polycétones et les mélanges de monofilaments de ces matériaux, de préférence réalisés dans un matériau choisi parmi les polyamides aromatiques et plus préférentiellement réalisés en para-aramide. Les polyamides aromatiques et notamment le para-aramide présentent une excellente ténacité leur conférant une bonne force à rupture, qualité recherchée pour la couche de l'élément filaire textile de renfort de frettage.

Dans les modes de réalisation précédents, par mélanges de monofilaments de ces matériaux, on entend des brins multifilamentaires comprenant un mélange de monofilaments réalisés dans des matériaux différents. De tels brins multifilamentaires sont notamment décrits dans WO2009052844.

Par monofilament en polyamide aromatique ou copolyamides aromatiques, on rappelle de manière bien connue qu'il s'agit d'un monofilament de macromolécules linéaires formées de groupes aromatiques liés entre eux par des liaisons amides dont au moins 85% sont directement liées à deux noyaux aromatiques, et plus particulièrement de fibres en poly (p-phénylène téréphtalamide) (ou PPTA), fabriquées depuis fort longtemps à partir de compositions de filage optiquement anisotropes. Parmi les polyamides aromatiques ou copolyamides aromatiques, on pourra citer les polyarylamides (ou PAA, notamment connu sous la dénomination commerciale Ixef de la société Solvay), le poly(métaxylylène adipamide), les polyphtalamides (ou PPA, notamment connu sous la dénomination commerciale Amodel de la société Solvay), les polyamides semi-aromatiques amorphes (ou PA 6-3T, notamment connu sous la dénomination commerciale Trogamid de la société Evonik), les para-aramides (ou poly(paraphénylène téréphtalamide ou PA PPD-T notamment connu sous la dénomination commerciale Kevlar de la société Du Pont de Nemours ou Twaron de la société Teijin).

Par monofilament en polycétone, on entend un monofilament en polymère thermoplastique obtenu par polycondensation d'éthylène et de monoxyde de carbone. Les filaments en polycétone ont eux aussi été décrits dans un très grand nombre de publications, par exemple EP 310 171, EP 456 306, EP 1 925 467, WO 2002/068738 ou US 6 818 728, US 2007/0017620, US 2009/0266462. A titre d'exemple, on pourra citer le Karilon de la société Hyosung, l'Akrotek de la société Akro-Plastic ou le Schulaketon de la société Schulman.

Par monofilament en polyester, on rappelle qu'il s'agit d'un monofilament de macromolécules linéaires formées de groupes liés entre eux par des liaisons esters. Les polyesters sont fabriqués par polycondensation par estérification entre un diacide carboxylique ou de l'un de ses dérivés et un diol. Par exemple, le polyéthylène téréphtalate peut être fabriqué par polycondensation de l'acide téréphtalique et de l'éthylène glycol. Parmi les polyesters connus, on pourra citer le polyéthylène téréphtalate (PET), le polyéthylène naphthalate (PEN), le polybutylène téréphthalate (PBT), le polybutylène naphthalate (PBN), le polypropylène téréphthalate (PPT) ou le polypropylène naphthalate (PPN).

Par monofilament en polyamide aliphatique, on entend un monofilament de macromolécules linéaires de polymères ou copolymères contenant des fonctions amides ne présentant pas de cycles aromatiques et pouvant être synthétisés par polycondensation entre un acide carboxylique et une amine. Parmi les polyamides aliphatiques, on pourra citer les nylons PA4.6, PA6, PA6.6 ou encore PA6.10, et notamment le Zytel de la société DuPont, le Technyl de la société Solvay ou le Rilsamid de la société Arkema.

Par monofilament en cellullose, on entend un monofilament en une matière cellulosique, c'est-à-dire à base de cellulose, d'un dérivé cellulosique ou de cellulose régénérée à partir d'un dérivé cellulosique, quel que soit bien entendu le procédé de filage. Par « dérivé cellulosique » il faut comprendre tout composé formé, à la suite de réactions chimiques, par substitution des groupes hydroxyle de la cellulose, ce dérivé étant aussi appelé dérivé de substitution. De manière tout aussi connue, on entend par « cellulose régénérée » une cellulose obtenue par un traitement de régénération réalisé sur un dérivé cellulosique. A titre d'exemples de fibres cellulosiques, on citera par exemple les fibres de rayonne ou viscose commercialisées par la société Cordenka ou les fibres de « Lyocell » commercialisées par la société Hyosung. On peut également citer les fibres à haut module en formiate de cellulose ou en cellulose régénérée telles que décrites dans les demandes WO 85/05115 ou WO 97/06294.

Ainsi, dans un mode de réalisation préféré, le premier brin de l'âme comprend au moins un monofilament réalisé dans un polyamide aliphatique, de préférence réalisé en nylon 6.6. De préférence, le premier brin est un brin multifilamentaire comprenant plusieurs monofilaments réalisés dans un polyamide aliphatique, de préférence réalisés en nylon 6.6. Les inventeurs ont découvert que le matériau constitutif de l'âme influait de façon importante sur l'endurance en compression de l'élément filaire textile. En effet, en étant au centre de l'élément filaire textile et donc sans hélice, le matériau de l'âme est immédiatement sollicité lorsque l'élément filaire textile est mis en compression axiale. Les polyamides aliphatiques présentant une endurance en compression améliorée par rapport aux polyesters, les inventeurs ont ainsi obtenu un élément filaire textile de renfort très endurant en compression.

Dans un mode de réalisation préféré, chaque deuxième brin de la couche comprend au moins un monofilament réalisé dans un polyamide aromatique, de préférence réalisé en para-aramide. De préférence, chaque deuxième brin de la couche est un brin multifilamentaire comprenant plusieurs monofilaments réalisés dans un polyamide aromatique, de préférence réalisés en para-aramide. Les inventeurs ont découvert que pour de faibles sollicitations et donc de faibles allongements, les deuxièmes brins de couche, de par leur hélice, influent peu sur le module car le matériau constitutif des monofilaments des deuxièmes brins de couche n'est pas sollicité. Pour des fortes sollicitations et donc des allongements élevés, l'allongement procuré par l'hélice ayant été consommé par la sollicitation, le matériau constitutif des monofilaments des deuxièmes brins de couche est alors sollicité. Du fait de la sélection d'un polyamide aromatique qui présente une excellente ténacité, on maximise alors le module de l'élément de renfort pour ces fortes sollicitations sans trop augmenter le module de l'élément de renfort pour les allongements plus faibles.

Dans un mode de réalisation, la couche est constituée de trois ou quatre deuxièmes brins, de préférence trois deuxièmes brins. Ainsi, on recouvre facilement intégralement la surface externe de l'âme. On utilise préférentiellement trois deuxièmes brins de façon à limiter le diamètre du ou de chaque élément filaire textile de renfort de frettage.

Avantageusement, le facteur de torsion du premier brin de l'âme va de 60 à 80, de préférence de 65 à 75. Avantageusement, le facteur de torsion de chaque deuxième brin de la couche va de 90 à 120, de préférence de 100 à 115.

Le facteur de torsion d'un brin est égal à R × (T/(1000 × ρ))^(1/2), relation dans laquelle R est la torsion du brin en tours par mètre avant son assemblage au sein de l'élément filaire textile de renfort de frettage, T le titre du brin en tex et ρ la densité du matériau constitutif du ou des monofilaments du brin.

Avantageusement, le facteur de torsion de l'élément filaire textile de renfort de frettage va de 170 à 220, de préférence de 180 à 210.

Le facteur de torsion de l'élément filaire textile de renfort de frettage est égal à R' × (T'/(1000 × ρ'))^(1/2), relation dans laquelle R' est la torsion de l'élément filaire textile de renfort de frettage en tours par mètre, T' le titre de l'élément filaire textile de renfort de frettage en tex et ρ' la densité des matériaux constitutifs du ou des monofilaments de l'élément filaire textile de renfort de frettage. Dans le cas de matériaux différents, le titre est obtenu en effectuant une moyenne des titres des brins pondérée par le nombre de brins. Dans le cas de matériaux différents, la densité est obtenue en effectuant une moyenne des densités pondérée par le nombre de brins et le titre de chaque brin.

Dans une première variante de l'âme, le premier brin de l'âme est constitué d'un filé, le filé comprenant au moins un monofilament, de préférence le filé comprenant plusieurs monofilaments. Dans cette première variante, on évite les étapes préalables d'assemblage de plusieurs filés pour fabriquer le brin de l'âme.

Dans une deuxième variante de l'âme, le premier brin de l'âme comprend un assemblage comprenant au moins deux filés distincts, chaque filé comprenant au moins un monofilament, de préférence chaque filé comprenant plusieurs monofilaments.

Avantageusement, le titre du premier brin de l'âme va de 10 tex à 100 tex, de préférence de 40 tex à 60 tex. Par titre du brin, on entend la somme des titres du ou des filés constitutifs du premier brin de l'âme. Ainsi, dans la première variante de l'âme, le titre du filé va de 10 tex à 100 tex, de préférence de 40 tex à 60 tex. Dans la deuxième variante de l'âme, dans le cas de deux filés constituants le premier brin de l'âme, le titre de chaque filé va de 5 tex à 50 tex, de préférence de 20 tex à 30 tex.

Dans une première variante de la couche, chaque deuxième brin de la couche est constitué d'un filé, le filé comprenant au moins un monofilament, de préférence le filé comprenant plusieurs monofilaments. Dans cette première variante, on évite les étapes préalables d'assemblage de plusieurs filés pour fabriquer chaque brin de la couche.

Dans une deuxième variante de la couche, chaque deuxième brin de la couche comprend un assemblage comprenant au moins deux filés distincts, chaque filé comprenant au moins un monofilament, de préférence chaque filé comprenant plusieurs monofilaments.

Avantageusement, le titre de chaque deuxième brin de la couche va de 50 tex à 350 tex, de préférence de 130 tex à 220 tex. Par titre du brin, on entend la somme des titres du ou des filés constitutifs de chaque deuxième brin de la couche. Ainsi, dans la première variante de la couche, le titre du filé va de 50 tex à 350 tex, de préférence de 130 tex à 220 tex. Dans la deuxième variante de la couche, dans le cas de deux filés constituants chaque deuxième brin de la couche, le titre de chaque filé va de 25 tex à 175 tex, de préférence de 65 tex à 110 tex.

Avantageusement, le rapport du titre du premier brin de l'âme sur la somme des titres des deuxièmes brins de la couche va de 0,05 et 0,15. De cette façon, on s'assure que l'âme est suffisamment recouverte par la couche, autrement dit que le premier brin de l'âme est intégralement contenu à l'intérieur d'un espace délimité par la couche.

Dans un mode de réalisation, le ou chaque élément filaire textile de renfort de frettage est obtenu par un procédé comprenant :
- une étape de torsion du premier brin de l'âme selon un nombre de tours par mètre N1 dans un premier sens de torsion,
- une étape de torsion de chaque deuxième brin de la couche selon un nombre de tours par mètre N1' dans le premier sens de torsion,
- une étape d'assemblage par torsion du premier brin de l'âme et des deuxièmes brins de la couche selon un nombre de tours par mètre N2 dans un deuxième sens de torsion opposé au premier sens de torsion.

De préférence, N1>N1' et N2=N1'. En raison de la géométrie de l'élément filaire textile de renfort de frettage, l'âme a besoin de moins de détorsion dans le deuxième sens pour avoir une torsion résiduelle nulle de ses monofilaments alors que le couche a besoin d'une détorsion sensiblement égale dans le deuxième sens pour avoir une torsion résiduelle nulle. Avantageusement, 1,02 ≤ N1/N1' ≤ 1,15 de préférence 1,05 ≤ N1/N1' ≤ 1,10.

Afin d'obtenir le meilleur compromis entre force à rupture et endurance de l'élément filaire textile de renfort présentant les titres définis ci-dessus :
- N1 va de 300 à 380 tours par mètre, de préférence de 320 à 360 tours par mètre,
- N1' va de 275 à 355 tours par mètre de préférence de 295 à 335 tours par mètre, et
- N2 va de 275 à 355 tours par mètre de préférence de 295 à 335 tours par mètre.

Avantageusement, le pneumatique comprend un sommet comprenant une bande de roulement, deux flancs, deux bourrelets, chaque flanc reliant chaque bourrelet au sommet, l'armature de sommet s'étendant dans le sommet selon une direction circonférentielle du pneumatique.

Avantageusement, le pneumatique comprend une armature de carcasse ancrée dans chacun des bourrelets et s'étendant dans les flancs et dans le sommet, l'armature de sommet étant radialement intercalée entre l'armature de carcasse et la bande de roulement.

Dans un mode de réalisation, l'armature de carcasse comprend une unique nappe de carcasse. Ainsi, l'armature de carcasse est, à l'exception de la nappe de carcasse, dépourvue de toute nappe renforcée par des éléments de renfort filaires. Les éléments de renfort filaires de telles nappes renforcées exclues de l'armature de carcasse du pneumatique comprennent les éléments de renfort filaires métalliques et les éléments de renfort filaires textiles. De façon très préférentielle, l'armature de carcasse est constituée par une nappe de carcasse..

De façon préférée, l'unique nappe de carcasse comprend des éléments filaires de renfort de carcasse.

Dans un mode de réalisation, chaque élément filaire de renfort de carcasse fait un angle A_{C1} supérieur ou égal à 55°, de préférence allant de 55° à 80° et plus préférentiellement allant de 60° à 70°, avec la direction circonférentielle du pneumatique dans le plan médian du pneumatique. Ainsi, les éléments filaires de renfort de carcasse, de par l'angle formé avec la direction circonférentielle, participe à la formation d'un maillage triangulaire dans le sommet du pneumatique.

Dans un mode de réalisation, chaque élément filaire de renfort de carcasse faisant un angle A_{C2} supérieur ou égal à 85° avec la direction circonférentielle du pneumatique dans le plan circonférentiel équatorial du pneumatique. Les éléments filaires de renfort de carcasse sont sensiblement radiaux dans chaque flanc, c'est-à-dire sensiblement perpendiculaires à la direction circonférentielle, ce qui permet de conserver tous les avantages d'un pneumatique à carcasse radiale.

Dans un mode de réalisation particulièrement avantageux, l'armature de sommet comprend une armature de travail comprenant une unique nappe de travail. Ainsi, l'armature de travail est, à l'exception de la nappe de travail, dépourvue de toute nappe renforcée par des éléments de renfort filaires. Les éléments de renfort filaires de telles nappes renforcées exclues de l'armature de travail du pneumatique comprennent les éléments de renfort filaires métalliques et les éléments de renfort filaires textiles. De façon très préférentielle,, l'armature de travail est constituée par une nappe de travail. Les propriétés de résistance mécanique et d'endurance de l'armature de frettage précédemment décrites permettent de supprimer avantageusement une nappe de travail de l'armature de travail. On obtient un pneumatique significativement allégé.

Dans un mode de réalisation, l'armature de frettage est radialement intercalée entre l'armature de travail et la bande de roulement. En variante, l'armature de frettage pourrait être radialement intercalée entre l'armature de travail et l'armature de carcasse.

De façon préférée, l'unique nappe de travail comprend des éléments filaires de renfort de travail.

Dans un mode de réalisation, chaque élément filaire de renfort de travail fait un angle A_{T} supérieur ou égal à 10°, de préférence allant de 30° à 50° et plus préférentiellement de 35° à 45° avec la direction circonférentielle du pneumatique dans le plan médian du pneumatique. Ainsi, les éléments filaires de renfort de travail, de par l'angle formé avec la direction circonférentielle, participent à la formation d'un maillage triangulaire dans le sommet du pneumatique.

Avantageusement, le ou les éléments filaires textiles de renfort de frettage, les éléments filaires de renfort de travail et les éléments filaires de renfort de carcasse sont agencés de façon à définir, en projection sur le plan circonférentiel équatorial, un maillage triangulaire. Un tel maillage permet d'obtenir des propriétés similaires à celles d'un pneumatique classique de l'état de la technique comprenant une nappe de frettage, deux nappes de travail et une nappe de carcasse.

Afin de former un maillage triangulaire le plus efficace possible, l'orientation de l'angle A_{T} et l'orientation de l'angle A_{C1} sont préférentiellement opposées par rapport à la direction circonférentielle du pneumatique.

Dans le pneumatique décrit, le sommet comprend la bande de roulement et l'armature de sommet. On entend par bande de roulement une bande de matériau polymérique, de préférence élastomérique, délimitée :
- radialement vers l'extérieur, par une surface destinée à être au contact d'un sol et
- radialement vers l'intérieur, par l'armature de sommet.

La bande de matériau polymérique est constituée d'une nappe d'un matériau matériau polymérique, de préférence élastomérique ou bien constituée d'un empilement de plusieurs nappes, chaque nappe étant constituée d'un matériau matériau polymérique, de préférence élastomérique.

Dans un mode de réalisation très préférentiel, l'armature de sommet comprend une unique armature de frettage et une unique armature de travail. Ainsi, l'armature de sommet est, à l'exception de l'armature de frettage et de l'armature de travail, dépourvue de toute armature renforcée par des éléments de renfort. Les éléments de renfort de telles armatures exclues de l'armature de sommet du pneumatique comprennent les éléments de renfort filaires, les tricots ou bien encore les tissus. De façon très préférentielle, l'armature de sommet est constituée de l'armature de frettage et de l'armature de travail.

Dans un mode de réalisation très préférentiel, le sommet est, à l'exception, de l'armature de sommet, dépourvue de toute armature renforcée par des éléments de renfort. Les éléments de renfort de telles armatures exclues du sommet du pneumatique comprennent les éléments de renfort filaires, les tricots ou bien encore les tissus. De façon très préférentielle, le sommet est constitué par la bande de roulement et l'armature de sommet.

Dans un mode de réalisation très préférentiel, l'armature de carcasse est agencée directement radialement au contact de l'armature de sommet et l'armature de sommet est agencée directement radialement au contact de la bande de roulement. Dans ce mode de réalisation très préférentiel, l'unique nappe de frettage et l'unique nappe de travail sont avantageusement agencées directement radialement au contact l'une de l'autre.

Par directement radialement au contact, on comprend que les objets considérés directement radialement au contact l'un de l'autre, ici les nappes, armatures ou la bande de roulement, ne sont séparés radialement par aucun objet, par exemple par aucune nappe, armature ni bande qui serait interposé radialement entre les objets considérés directement radialement au contact l'un de l'autre.

Avantageusement, les éléments filaires de renfort de chaque nappe sont noyés dans une matrice élastomérique. Les différentes nappes peuvent comprendre la même matrice élastomérique ou bien des matrices élastomériques distinctes.

Par matrice élastomérique, on entend une matrice présentant, à l'état réticulé, un comportement élastomérique. Une telle matrice est avantageusement obtenue par réticulation d'une composition comprenant au moins un élastomère et au moins un autre composant. De préférence, la composition comprenant au moins un élastomère et au moins un autre composant comprend un élastomère, un système de réticulation et une charge.

De préférence, l'élastomère est un élastomère diénique, c'est-à-dire pour rappel tout élastomère (élastomère unique ou mélange d'élastomères) qui est issu, au moins en partie (i.e., un homopolymère ou un copolymère), de monomères diènes c'est-à-dire de monomères porteurs de deux doubles liaisons carbone-carbone, que ces dernières soient conjuguées ou non. Cet élastomère diénique est choisi plus préférentiellement dans le groupe constitué par les polybutadiènes (BR), le caoutchouc naturel (NR), les polyisoprènes de synthèse (IR), les copolymères de butadiène, les copolymères d'isoprène, et les mélanges de ces élastomères, de tels copolymères étant notamment choisis dans le groupe constitué par les copolymères de butadiène-styrène (SBR), les copolymères d'isoprène-butadiène (BIR), les copolymères d'isoprène-styrène (SIR) et les copolymères d'isoprène-butadiène-styrène (SBIR). Un mode de réalisation particulièrement préférentiel consiste à utiliser un élastomère "isoprénique", c'est-à-dire un homopolymère ou un copolymère d'isoprène, en d'autres termes un élastomère diénique choisi dans le groupe constitué par le caoutchouc naturel (NR), les polyisoprènes de synthèse (IR), les différents copolymères d'isoprène et les mélanges de ces élastomères.

De préférence, le système de réticulation de chaque composition est un système dit de vulcanisation, c'est-à-dire à base de soufre (ou d'un agent donneur de soufre) et d'un accélérateur primaire de vulcanisation. A ce système de vulcanisation de base peuvent s'ajouter divers accélérateurs secondaires ou activateurs de vulcanisation connus. Le soufre est utilisé à un taux préférentiel compris entre 0,5 et 10 pce, l'accélérateur primaire de vulcanisation, par exemple un sulfénamide, est utilisé à un taux préférentiel compris entre 0,5 et 10 pce. Le taux de charge renforçante, par exemple du noir de carbone et/ou de la silice, est de préférence supérieur à 30 pce, notamment compris entre 30 et 100 pce. Par pce, on entend parties en poids pour cent parties d'élastomère.

Comme noirs de carbone conviennent tous les noirs de carbone, notamment les noirs du type HAF, ISAF, SAF conventionnellement utilisés dans les pneumatiques (noirs dits de grade pneumatique). Parmi ces derniers, on citera plus particulièrement les noirs de carbone de grade (ASTM) 300, 600 ou 700 (par exemple N326, N330, N347, N375, N683, N772). Comme silices conviennent notamment les silices précipitées ou pyrogénées présentant une surface BET inférieure à 450 m2/g, de préférence de 30 à 400 m2/g.

L'homme de l'art saura, à la lumière de la présente description, ajuster la formulation des compositions afin d'atteindre les niveaux de propriétés (notamment module d'élasticité) souhaités, et adapter la formulation à l'application spécifique envisagée. Ainsi, chaque composition peut comporter un seul ou plusieurs élastomère(s) diénique(s), également tout ou partie des additifs habituellement utilisés dans les composition destinées à la fabrication de pneumatiques, tels que par exemple des charges renforçantes comme le noir de carbone ou la silice, des agents de couplage, des agents anti-vieillissement, des antioxydants, des agents plastifiants ou des huiles d'extension, que ces derniers soient de nature aromatique ou non-aromatique (notamment des huiles très faiblement ou non aromatiques, par exemple du type naphténiques ou paraffiniques, à haute ou de préférence à basse viscosité, des huiles MES ou TDAE), des résines plastifiantes à haute température de transition vitreuse (supérieure à 30°C), des agents facilitant la mise en œuvre (processabilité) des compositions à l'état cru, des résines tackifiantes, des agents anti-réversion, des accepteurs et donneurs de méthylène tels que par exemple HMT (hexaméthylènetétramine) ou H3M (hexaméthoxyméthylmélamine), des résines renforçantes, des systèmes promoteurs d'adhésion connus du type sels métalliques par exemple, notamment sels de cobalt, de nickel ou de lanthanide.

De préférence, chaque matrice élastomérique présente un module sécant en extension, à 10% d'allongement, qui est compris entre 4 et 25 MPa, plus préférentiellement entre 4 et 20 MPa ; des valeurs comprises notamment entre 5 et 15 MPa se sont révélées particulièrement convenir. Les mesures de module sont effectuées en traction, sauf indication différente selon la norme ASTM D 412 de 1998 (éprouvette "C") : on mesure en seconde élongation (c'est-à-dire après un cycle d'accommodation) le module sécant "vrai" (c'est-à-dire ramené à la section réelle de l'éprouvette) à 10% d'allongement, noté ici Ms et exprimé en MPa (conditions normales de température et d'hygrométrie selon la norme ASTM D 1349 de 1999).

Avantageusement, chaque élément filaire de renfort de travail est métallique. Par élément filaire métallique, on entend par définition un élément filaire formé d'un ou d'un assemblage de plusieurs fils constitués intégralement (pour 100% des fils) d'un matériau métallique. Un tel élément filaire métallique est préférentiellement mis en œuvre avec un ou des fils en acier, plus préférentiellement en acier perlitique (ou ferrito-perlitique) au carbone désigné ci-après par "acier au carbone", ou encore en acier inoxydable (par définition, acier comportant au moins 11% de chrome et au moins 50% de fer). Mais il est bien entendu possible d'utiliser d'autres aciers ou d'autres alliages. Lorsqu'un acier au carbone est avantageusement utilisé, sa teneur en carbone (% en poids d'acier) est de préférence comprise entre 0,2% et 1,2%, notamment entre 0,5% et 1,1% ; ces teneurs représentent un bon compromis entre les propriétés mécaniques requises pour le pneumatique et la faisabilité des fils. Le métal ou l'acier utilisé, qu'il s'agisse en particulier d'un acier au carbone ou d'un acier inoxydable, peut être lui-même revêtu d'une couche métallique améliorant par exemple les propriétés de mise en œuvre du câble métallique et/ou de ses éléments constitutifs, ou les propriétés d'usage du câble et/ou du pneumatique eux-mêmes, telles que les propriétés d'adhésion, de résistance à la corrosion ou encore de résistance au vieillissement. Selon un mode de réalisation préférentiel, l'acier utilisé est recouvert d'une couche de laiton (alliage Zn-Cu) ou de zinc.

L'invention sera mieux comprise à la lecture de la description qui va suivre, donnée uniquement à titre d'exemple non limitatif et faite en se référant aux dessins dans lesquels :
- la figure 1 est une vue en coupe perpendiculaire à la direction circonférentielle d'un pneumatique selon l'invention ;
- figure 2 est une vue en arraché du pneumatique de la figure 1 illustrant la projection sur le plan circonférentiel équatorial E des éléments de filaire de renfort de frettage, des éléments filaires de renfort de travail et des éléments filaires de renfort de carcasse ;
- la figure 3 est une vue des éléments filaires de renfort de carcasse agencés dans le flanc du pneumatique de la figure 1 en projection sur le plan médian M du pneumatique ;
- la figure 4 est une photographie d'une coupe perpendiculaire à l'axe d'un élément filaire textile de renfort de frettage adhérisé (supposé rectiligne et au repos) du pneumatique de la figure 1;
- la figure 5 est un graphique représentant la variation des modules tangents d'éléments filaires textiles de renfort de frettage adhérisés de pneumatiques conformes à l'invention et de l'état de la technique, et
- la figure 6 est un graphique représentant la variation des modules tangents d'éléments filaire de renfort de frettage adhérisés de pneumatiques conformes à l'invention avant l'étape de fabrication de la nappe de frettage.

### EXEMPLE DE PNEUMATIQUE SELON L'INVENTION

Dans les figures, on a représenté un repère X, Y, Z correspondant aux directions habituelles respectivement axiale (X), radiale (Y) et circonférentielle (Z) d'un pneumatique.

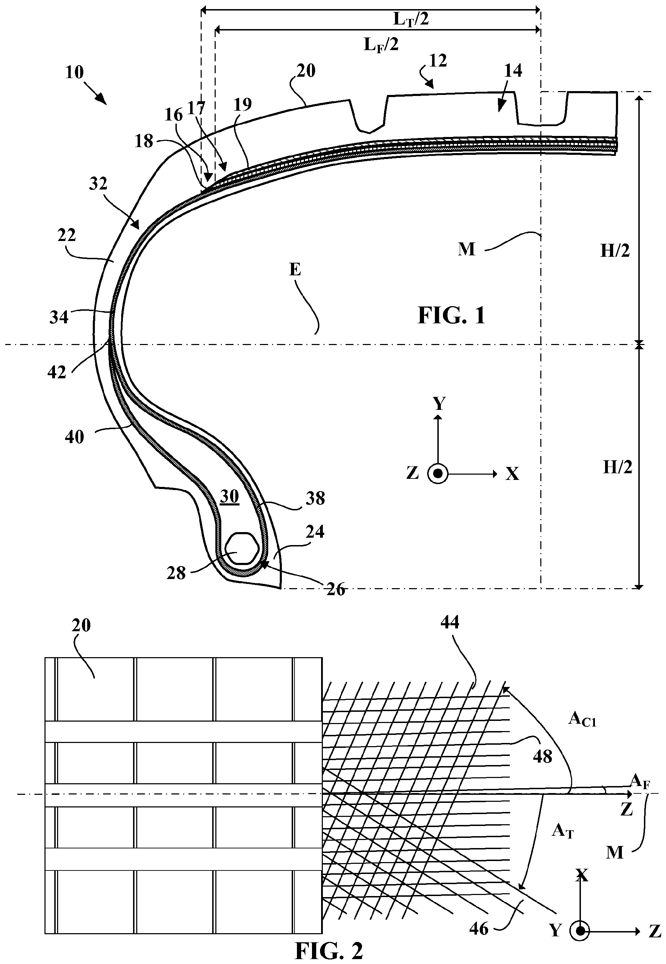

On a représenté sur la figure 1 un pneumatique, conforme à l'invention et désigné par la référence générale 10. Le pneumatique 10 est sensiblement de révolution autour d'un axe sensiblement parallèle à la direction axiale X. Le pneumatique 10 est ici destiné à un véhicule de tourisme.

Le pneumatique 10 comporte un sommet 12 comprenant une bande de roulement 20 et une armature de sommet 14 s'étendant dans le sommet 12 selon la direction circonférentielle Z. Ici, le sommet 12 est constitué par la bande de roulement 20 et l'armature de sommet 14.

L'armature de sommet 14 comprend une unique armature de travail 16 comprenant une unique nappe de travail 18 et une unique armature de frettage 17 comprenant une unique nappe de frettage 19. Ici, l'armature de sommet est constituée par l'armature de travail 16 et l'armature de frettage 19. Ici, l'armature de travail 16 est constituée de la nappe de travail 18 et l'armature de frettage 17 est constituée de la nappe de frettage 19.

L'armature de sommet 14 est surmontée de la bande de roulement 20. Ici, l'armature de frettage 17, ici la nappe de frettage 19, est radialement intercalée entre l'armature de travail 16 et la bande de roulement 20.

Le pneumatique 10 comprend deux flancs 22 prolongeant le sommet 12 radialement vers l'intérieur. Le pneumatique 10 comporte en outre deux bourrelets 24 radialement intérieurs aux flancs 22 et comportant chacun une structure annulaire de renfort 26, en l'occurrence une tringle 28, surmontée d'un masse de gomme 30 de bourrage, ainsi qu'une armature de carcasse radiale 32. L'armature de sommet 14 est située radialement entre l'armature de carcasse 32 et la bande de roulement 20. Chaque flanc 22 relie chaque bourrelet 24 au sommet 12.

L'armature de carcasse 32 comporte une unique nappe de carcasse 34. L'armature de carcasse 32 est ancrée dans chacun des bourrelets 24 par un retournement autour de la tringle 28 de manière à former dans chaque bourrelet 24 un brin aller 38 s'étendant depuis les bourrelets 24 dans les flancs 22 et dans le sommet 12, et un brin retour 40, l'extrémité radialement extérieure 42 du brin retour 40 étant radialement à l'extérieur de la structure annulaire de renfort 26. L'armature de carcasse 32 s'étend ainsi depuis les bourrelets 24 à travers les flancs 22 jusque dans le sommet 12. Dans ce mode de réalisation, l'armature de carcasse 32 s'étend également axialement au travers du sommet 12. L'armature de sommet 14 est radialement intercalée entre l'armature de carcasse 32 et la bande de roulement 20.

En variante, l'armature de frettage 17 pourrait être radialement intercalée entre l'armature de travail 16 et l'armature de carcasse 32.

Chaque nappe de travail 18, de frettage 19 et de carcasse 34 comprend une matrice élastomérique dans laquelle sont noyés un ou des éléments de renfort de la nappe correspondante.

En référence à la figure 2, l'unique nappe de carcasse 34 comprend des éléments filaires de renfort de carcasse 44. Chaque élément filaire de renfort de carcasse 44 fait un angle A_{C1} supérieur ou égal à 55°, de préférence allant de 55° à 80° et plus préférentiellement de 60° à 70°, avec la direction circonférentielle Z du pneumatique 10 dans le plan médian M du pneumatique 10, autrement dit dans le sommet 12.

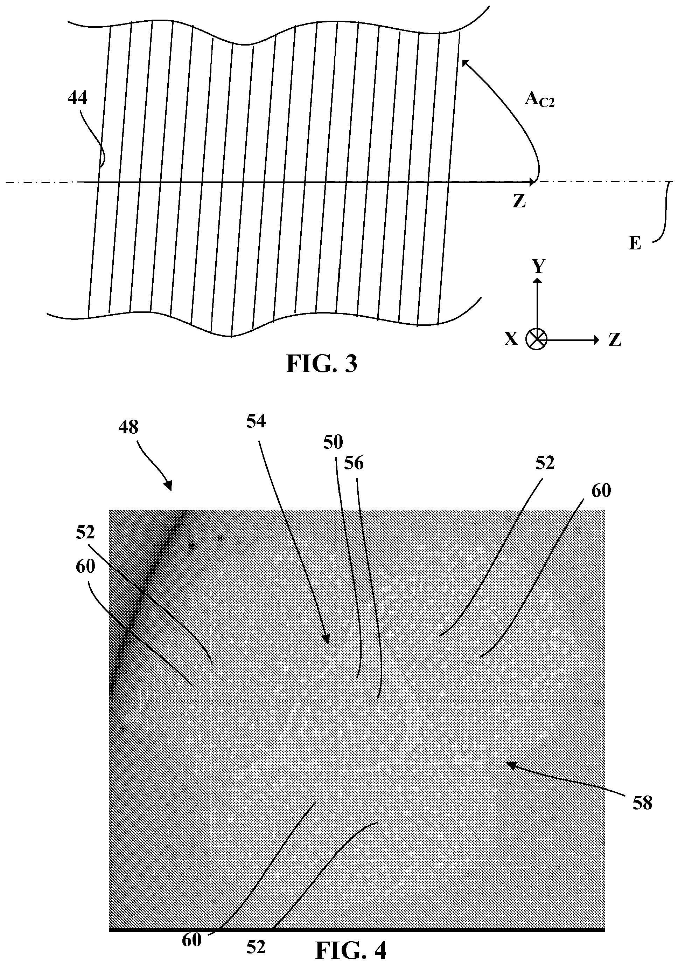

En référence à la figure 3 qui est une vue simplifiée où, compte tenu de l'échelle, tous les éléments filaires de renfort de carcasse 44 sont représentés parallèles les uns aux autres, chaque élément filaire de renfort de carcasse 44 fait un angle A_{C2} supérieur ou égal à 85° avec la direction circonférentielle Z du pneumatique 10 dans le plan circonférentiel équatorial E du pneumatique 10, autrement dit dans chaque flanc 22.

Dans cet exemple, on prend comme convention qu'un angle orienté dans le sens anti-horaire à partir de la droite de référence, ici la direction circonférentielle Z, est de signe positif et qu'un angle orienté dans le sens horaire à partir de la droite de référence, ici la direction circonférentielle Z, est de signe négatif. En l'espèce, A_{C1}=+67° et A_{C2}=+90°.

En référence à la figure 2, l'unique nappe de travail 18 comprend des éléments filaires de renfort de travail 46. Chaque élément filaire de renfort de travail 46 fait un angle A_{T} supérieur ou égal à 10°, de préférence allant de 30° à 50° et plus préférentiellement de 35° à 45° avec la direction circonférentielle Z du pneumatique 10 dans le plan médian M. Compte tenu de l'orientation définie précédemment, A_{T}=-40°.

L'unique nappe de frettage 19 comprend au moins un élément filaire textile de renfort de frettage 48. En l'espèce, la nappe de frettage 19 comprend un unique élément filaire textile de renfort de frettage 48 enroulé continument sur une largeur axiale L_{F} du sommet 12 du pneumatique 10. Avantageusement, la largeur axiale L_{F} est inférieure à la largeur L_{T} de la nappe de travail 18. L'élément filaire textile de renfort de frettage 48 fait un angle A_{F} strictement inférieur à 10° avec la direction circonférentielle Z du pneumatique 10, de préférence inférieur ou égal à 7°, et plus préférentiellement inférieur ou égal à 5°. En l'espèce, A_{F}=+5°.

La nappe de frettage présente un module sécant en traction égal à 261 daN/mm pour une force égale à 15% de la force à rupture de la nappe de frettage. La force à rupture de la nappe de frettage est égale à 59 daN/mm.

On notera que les éléments filaires de renfort de carcasse 44, de travail 46 et de frettage 48 sont agencés, dans le sommet 12, de façon à définir, en projection sur le plan circonférentiel équatorial E, un maillage triangulaire. Ici, l'angle A_{F} et le fait que l'orientation de l'angle A_{T} et l'orientation de l'angle A_{C1} soient opposées par rapport à la direction circonférentielle Z du pneumatique 10, permettent d'obtenir ce maillage triangulaire.

Chaque élément filaire de renfort de carcasse 44 comprend classiquement deux brins multifilamentaires, chaque brin multifilamentaire étant constitué d'un filé de monofilaments de polyesters, ici de PET, ces deux brins multifilamentaires étant surtordus individuellement à 240 tours.m⁻¹ dans un sens puis retordus ensemble à 240 tours.m⁻¹ dans le sens opposé. Ces deux brins multifilamentaires sont enroulés en hélice l'un autour de l'autre. Chacun de ces brins multifilamentaires présente un titre égal à 220 tex.

Chaque élément filaire de renfort de travail 46 est un assemblage de deux monofilaments en acier présentant chacun un diamètre égal à 0,30 mm, les deux monofilaments en acier étant enroulés l'un avec l'autre au pas de 14 mm.

L'élément filaire textile de renfort de frettage 48, illustré sur la figure 4, comprend au moins un premier brin 50 comprenant au moins un monofilament, en l'espèce un premier brin multifilamentaire comprenant plusieurs monofilaments. Le premier brin présente un module sécant en traction à 1% d'allongement inférieur ou égal à 2500 cN/tex, de préférence inférieur ou égal à 900 cN/tex et plus préférentiellement inférieur ou égal à 500 cN/tex. En l'espèce, les monofilaments du premier brin 50 sont réalisés dans un matériau choisi parmi les polyesters, les polyamides aliphatiques, les celluloses et les mélanges de monofilaments de ces matériaux, de préférence réalisés dans un matériau choisi parmi les polyamides aliphatiques et plus préférentiellement ici réalisés en nylon 6.6.

L'élément filaire textile de renfort de frettage 48 comprend également au moins un deuxième brin 52 comprenant au moins un monofilament, en l'espèce plusieurs deuxièmes brins multifilamentaires comprenant chacun plusieurs monofilaments. Chaque deuxième brin 52 présente un module sécant en traction à 1% d'allongement supérieur ou égal à 500 cN/tex, de préférence supérieur ou égal à 1000 cN/tex et plus préférentiellement supérieur ou égal à 2200 cN/tex. En l'espèce, les monofilaments de chaque deuxième brin 52 sont réalisés dans un matériau choisi parmi les polyamides aromatiques, les copolyamides aromatiques, les polycétones et les mélanges de monofilaments de ces matériaux, de préférence réalisés dans un matériau choisi parmi les polyamides aromatiques et plus préférentiellement ici réalisés en para-aramide.

L'élément filaire textile de renfort de frettage 48 comprend une âme 54 constituée du premier brin 50 tel que décrit ci-dessus. En d'autres termes, l'âme 54 comprend un unique premier brin 50, pas deux.

Dans le mode de réalisation représenté, le premier brin multifilamentaire 50 de l'âme 54 est constitué d'un unique filé 56 de plusieurs monofilaments ici réalisés en nylon 6.6. Le titre du premier brin 50 de l'âme 54 va de 10 tex à 100 tex et ici de 40 tex à 60 tex. En l'espèce, le premier brin 50 de l'âme 54 est constitué d'un filé présentant un titre égal à 47 tex connu sous la dénomination commerciale Enka Nylon 4444HRT de la société PHP Fibers.

En variante, on pourrait envisager que le premier brin de l'âme comprenne un assemblage comprenant plusieurs filés, c'est-à-dire au moins deux filés distincts de monofilaments réalisés dans un matériau choisi parmi les polyesters, les polyamides aliphatiques, les celluloses et les mélanges de monofilaments de ces matériaux, de préférence réalisés dans un matériau choisi parmi les polyamides aliphatiques et plus préférentiellement réalisés en nylon 6.6.

L'élément filaire textile de renfort de frettage 48 comprend également une couche 58 comprenant au moins deux deuxièmes brins 52 tels que décrits ci-dessus. Chaque deuxième brin 52 de la couche 58 est enroulé en hélice autour de l'âme 54. La couche 58 est constituée de trois ou quatre deuxièmes brins 52, et ici de trois deuxièmes brins 52.

Dans le mode de réalisation représenté, chaque deuxième brin multifilamentaire 52 de la couche 58 est constitué d'un unique filé 60 de monofilaments ici réalisés en para-aramide. Le titre de chaque deuxième brin 52 de la couche 58 va de 50 tex à 350 tex et ici de 130 tex à 220 tex. En l'espèce, chaque deuxième brin 52 de la couche 58 est constitué d'un filé de monofilaments de para-aramide présentant un titre égal à 167 tex connu sous la dénomination commerciale Twaron 1000 de la société Teijin.

En variante, on pourrait envisager que chaque deuxième brin de la couche comprenne un assemblage comprenant plusieurs filés, c'est-à-dire au moins deux filés distincts de monofilaments réalisés dans un matériau choisi parmi les polyamides aromatiques, les copolyamides aromatiques, les polycétones et les mélanges de monofilaments de ces matériaux, de préférence réalisés dans un matériau choisi parmi les polyamides aromatiques et plus préférentiellement réalisés en para-aramide.

La somme des raideurs Sc en traction à 1% d'allongement des deuxièmes brins 52 est supérieure à la raideur Sa en traction à 1% d'allongement du premier brin 50. En l'espèce, la raideur en traction à 1% d'allongement de chaque deuxième brin en para-aramide est égale à 621 daN et la raideur en traction à 1% d'allongement du premier brin en nylon 6.6 est égal à 15 daN. On a bien Sc=3 × 621 > Sa=15, de préférence Sc/Sa ≥ 10, plus préférentiellement Sc/Sa ≥ 50 et encore plus préférentiellement Sc/Sa ≥ 100.

Le rapport du titre du premier brin de l'âme sur la somme des titres des deuxièmes brins de la couche va de 0,05 et 0,15 et ici est égal à 0,09.

### Procédé de fabrication de l'élément filaire textile de frettage

On fabrique l'élément filaire textile de renfort adhérisé 48 en mettant en œuvre un procédé de fabrication comprenant les étapes suivantes.

Le procédé comprend tout d'abord des étapes d'assemblage d'un élément filaire textile de renfort écru dans lesquelles on assemble le premier brin 50 de l'âme 54 et les deuxièmes brins 52 de la couche 58 de façon à former un élément filaire textile de renfort écru.

Dans une étape de torsion du premier brin 50 de l'âme 54, on applique une torsion au premier brin 50 selon un nombre de tours par mètre N1 dans un premier sens de torsion, par exemple le sens Z. Dans une autre étape de torsion de chaque deuxième brin 52 de la couche 58, on applique une torsion à chaque deuxième brin 52 selon un nombre de tours par mètre N1' dans le premier sens de torsion Z.

Puis, dans une étape d'assemblage par torsion du premier brin 50 de l'âme 54 et des deuxièmes brins 52 de la couche 58, on applique une torsion à l'ensemble des brins 50, 52 de l'âme et de la couche selon un nombre de tours par mètre N2 dans un deuxième sens de torsion opposé au premier sens de torsion, ici dans le sens S.

On choisit N1, N1' et N2 de sorte que la torsion résiduelle des monofilaments du premier brin 50 de l'âme 54 et la torsion résiduelle des monofilaments de chaque deuxième brin 52 de la couche 58 est inférieure ou égale à 10 tours.m⁻¹, de préférence sensiblement nulle. Le choix de N1, N1', N2 dépend alors du titre de chaque brin, du nombre de deuxièmes brins de la couche mais également de paramètres du procédé de fabrication, notamment des tensions T₁, T₂ respectivement des premier et deuxièmes brins et/ou des vitesses V₁, V₂ respectivement des premier et deuxièmes brins dans le dispositif d'assemblage. Ainsi, N1>N1' et N2=N1'. Avantageusement, on a 1,02 ≤ N1/N1' ≤ 1,15, et de préférence 1,05 ≤ N1/N1' ≤ 1,10. Ici N1/N1'=1,08.

N1 va de 300 à 380 tours par mètre, de préférence de 320 à 360 tours par mètre et ici N1=340 tours par mètre. N1' va de 275 à 355 tours par mètre, de préférence de 295 à 335 tours par mètre et ici N1'=315 tours par mètre. N2 va de 275 à 355 tours par mètre, de préférence de 295 à 335 tours par mètre et ici N2=315 tours par mètre.

Ainsi, la densité du nylon 6.6 étant égale à 1,14 et la densité du para-aramide étant égale à 1,44, le facteur de torsion du premier brin 50 de l'âme 54 va de 60 à 80, de préférence de 65 à 75 et ici est égal à 69. Le facteur de torsion de chaque deuxième brin 52 de la couche 58 va de 90 à 120, de préférence de 100 à 115 et est ici égal à 107.

La densité pondérée de l'élément filaire textile de renfort de frettage 48 étant égale à 1,41 et le titre pondéré de l'élément filaire textile de renfort de frettage 48 étant égal à 548 tex, le facteur de torsion de l'élément filaire textile de renfort de frettage 48 va de 170 à 220, de préférence de 180 à 210 et est ici égal à 196.

Avant l'assemblage des premier et deuxièmes brins 50, 52, le procédé comprend une étape d'amenée au cours de laquelle on achemine le premier brin 50 et les deuxièmes brins 52, jusqu'à un point d'assemblage au niveau duquel les premier et deuxièmes brins 50, 52 sont assemblés. Le procédé comprend avantageusement une étape d'asservissement en tension de brin, en boucle fermée, au cours de laquelle :
- on définit une consigne de tension, dite « consigne de tension d'assemblage », qui est représentative d'un état de tension longitudinale que l'on souhaite obtenir dans chaque brin 50, 52 lorsque chaque brin 50, 52 parvient au point d'assemblage,
- on mesure, en un premier point de mesure de tension qui est situé le long de chaque brin 50, 52 et en amont du point d'assemblage par rapport au sens d'acheminement de chaque brin 50, 52, la tension dite « tension d'assemblage effective » qui s'exerce au sein de chaque brin 50, 52, et
- on utilise une boucle de rétroaction en tension pour déterminer une erreur, dite « erreur de tension », qui correspond à la différence entre la consigne de tension d'assemblage et la tension d'assemblage effective de chaque brin 50, 52,
- on pilote, à partir de ladite erreur de tension, un organe régulateur de tension, qui agit sur chaque brin 50, 52en amont du point d'assemblage, de sorte à faire converger automatiquement, au sein de chaque brin 50, 52, la tension d'assemblage effective vers la consigne de tension d'assemblage.

L'installation permettant de mettre en œuvre ce procédé peut correspondre à un métier à anneau que l'on aura perfectionné en lui ajoutant notamment une unité d'asservissement en tension, ou des unités d'asservissement en tension, permettant d'asservir en boucle fermée la tension de chaque brin 50, 52.

En pratique, l'installation comprend un dispositif d'amenée agencé de manière à permettre de dérouler et d'acheminer jusqu'au point d'assemblage chaque brin 50, 52 depuis une bobine d'entrée sur laquelle chaque brin 50, 52 est initialement stocké. Le dispositif d'amenée considéré pourra avantageusement comprendre un dispositif d'entraînement motorisé situé en amont du point d'assemblage et agencé pour conférer à chaque brin 50, 52 une vitesse dite « vitesse d'avance » en réponse à une consigne d'entraînement que l'on applique au dispositif d'entraînement. Ainsi, le dispositif d'entraînement motorisé permet d'entraîner chaque brin 50, 52 dans un sens dit « sens d'acheminement », de la bobine d'entrée vers le point d'assemblage. Par convention, on considérera que le sens d'acheminement selon lequel chaque brin 50, 52 se déplace de la bobine d'entrée vers le point d'assemblage puis au-delà, correspond à un sens de déplacement amont-aval. Le dispositif d'entraînement motorisé pourra comprendre par exemple un cabestan ou en variante un trio d'appel. Un tel trio d'appel comprend trois rouleaux dont un rouleau planétaire, de préférence libre, et deux rouleaux satellites, de préférence motorisés et synchronisés, les rouleaux étant agencés de manière à ce que chaque brin 50, 52 soit entraîné par friction entre les rouleaux, selon un chemin en forme de Ω (oméga majuscule). Dans cette configuration destinée à entraîner chaque brin 50, 52 en déplacement, le rouleau planétaire peut de préférence venir au contact des deux rouleaux satellites, et la surface cylindrique du rouleau planétaire peut être revêtue d'une couche de gomme antidérapante, afin d'améliorer l'entraînement du rouleau planétaire par les rouleaux satellites. Bien entendu, le dispositif d'amenée pourra comprendre plusieurs dispositifs d'entraînement motorisés distincts, affectés chacun à un brin différent.

Selon une possibilité d'agencement, par ailleurs connue en soi au sein d'une installation de type « métier à anneau », l'installation peut comporter un œillet de guidage, par exemple en céramique, destiné à guider l'élément filaire textile en aval du point d'assemblage, ici directement en aval du point d'assemblage, ainsi qu'un anneau qui est coaxial à une bobine de sortie et sur lequel un curseur, qui forme un point de passage de l'élément filaire textile situé en aval de l'œillet de guidage et en amont de la bobine de sortie, est monté en glissement libre.

Ainsi, lorsque la bobine de sortie est entraînée en rotation sur son axe, de préférence vertical, au moyen d'une broche motorisée, et exerce ainsi une traction sur l'élément filaire textile, tandis que l'alimentation en brins est assurée par le dispositif d'amenée, le curseur adopte un mouvement de rotation relatif autour de la bobine de sortie, ce qui provoque un effort de vrillage de l'élément filaire textile, et donc le retordage des brins au point d'assemblage, tout en guidant l'enroulement progressif de l'élément filaire textile sur la bobine de sortie. L'anneau est en outre animé d'un mouvement de va-et-vient en translation le long de l'axe de la bobine de sortie de sorte à répartir les spires d'élément filaire textile sur toute la longueur de la bobine de sortie. Par ailleurs, le dispositif d'amenée peut de préférence comprendre un répartiteur agencé pour répartir les brins dans l'espace afin d'ordonner la configuration géométrique selon laquelle les brins convergent vers le point d'assemblage situé en aval, ici directement en aval, et plus préférentiellement juste en dessous, du répartiteur. Le répartiteur peut se présenter sous forme d'une plaque-support qui définit une pluralité de points de passage destinés chacun à guider les brins en provenance des bobines d'entrée et/ou des dispositifs d'entraînement motorisés.

Le procédé comprend une étape d'asservissement en tension de brin. La tension de chaque brin 50, 52 correspond à l'effort de traction longitudinale qui s'exerce au sein chaque brin 50, 52 au point considéré, et donc à la contrainte de traction qui résulte de l'application de cet effort. L'asservissement en tension de chaque brin 50, 52 s'opère en boucle fermée. Au cours de l'étape d'asservissement en tension chaque brin 50, 52:
- on définit une consigne de tension, dite « consigne de tension d'assemblage » T_set, qui est représentative d'un état de tension longitudinale que l'on souhaite obtenir dans chaque brin 50, 52 lorsque chaque brin 50, 52 parvient au point d'assemblage,
- on mesure, en un premier point de mesure de tension PT1 qui est situé le long d chaque brin 50, 52 et en amont du point d'assemblage par rapport au sens d'acheminement de chaque brin 50, 52, la tension dite « tension d'assemblage effective » T_actual qui s'exerce au sein de chaque brin 50, 52,
- on utilise une boucle de rétroaction en tension pour déterminer une erreur, dite « erreur de tension » ER_T, qui correspond à la différence entre la consigne de tension d'assemblage et la tension d'assemblage effective de chaque brin 50, 52 : ER_T = T_set - T_actual, et
- on pilote, à partir de l'erreur de tension ER_T, un organe régulateur de tension, qui agit sur chaque brin 50, 52 en amont du point d'assemblage, de sorte à faire converger automatiquement, au sein de chaque brin 50, 52, la tension d'assemblage effective T_actual vers la consigne de tension d'assemblage T_set.

L'installation comprend donc une unité d'asservissement en tension, agencée pour asservir en boucle fermée la tension du brin considéré selon un mode de fonctionnement dit « mode d'asservissement en tension », l'unité d'asservissement en tension comprenant à cet effet :
- un organe de fixation de consigne de tension qui permet de fixer une consigne, dite « consigne de tension d'assemblage » T_set, qui est représentative d'un état de tension longitudinale que l'on souhaite obtenir dans chaque brin 50, 52 lorsque le brin parvient au point d'assemblage,
- un organe de surveillance de tension qui mesure, en un premier point de mesure de tension PT1 qui est situé le long de chaque brin 50, 52 et en amont du point d'assemblage par rapport au sens d'acheminement de chaque brin 50, 52, la tension dite « tension d'assemblage effective » T_actual qui s'exerce au sein de chaque brin 50, 52,
- un organe de rétroaction en tension qui évalue une erreur, dite « erreur de tension » ER_T, qui correspond à la différence entre la consigne de tension d'assemblage T_set et la tension d'assemblage effective T_actual de chaque brin 50, 52, et
- un organe régulateur de tension, placé sous la dépendance de l'organe de rétroaction en tension, et qui agit sur chaque brin 50, 52 en amont du point d'assemblage de sorte à faire converger automatiquement, au sein de chaque brin 50, 52, la tension d'assemblage effective T_actual vers la consigne de tension d'assemblage T_set.

Bien entendu, on pourra fixer, des consignes de tension d'assemblage T_set différentes pour chaque brin 50, 52, et assurer une régulation séparée de chaque brin 50, 52, indépendante des autres brins.

Par ailleurs, lors de l'étape d'amenée, chaque brin 50, 52 est de préférence, comme cela a été mentionné plus haut, entraîné en déplacement vers le point d'assemblage au moyen d'un dispositif d'entraînement motorisé, tel qu'un cabestan, qui est situé en amont du point d'assemblage et qui est agencé pour conférer à chaque brin 50, 52 une vitesse dite « vitesse d'avance » V_fwd en réponse à une consigne d'entraînement que l'on applique au dispositif d'entraînement motorisé. De préférence, on choisit alors le premier point de mesure de tension PT1, où l'on mesure la tension d'assemblage effective T_actual, de manière à ce que ledit premier point de mesure de tension PT1 soit situé dans un tronçon de chaque brin 50, 52, dit « tronçon d'approche », qui s'étend depuis le dispositif d'entraînement motorisé, en amont, et le point d'assemblage, en aval. Ainsi, avantageusement, la mesure de la tension d'assemblage effective T_actual se fait en un point de mesure PT1 qui est compris entre la position (considérée le long du chemin emprunté par le brin concerné) du dispositif d'entraînement motorisé et la position (considérée le long du chemin emprunté par le brin concerné) du point d'assemblage, et qui est donc particulièrement proche du point d'assemblage. Plus particulièrement, le point de mesure de tension PT1 ainsi choisi peut donc être situé entre le point d'assemblage et le dernier élément moteur, ici le dispositif d'entraînement motorisé, qui précède le point d'assemblage, dans le sens amont-aval de cheminement du brin concerné. La tension d'assemblage effective T_actual est donc mesurée de préférence en aval du dernier dispositif motorisé (ici le dispositif d'entraînement motorisé) qui soit susceptible d'agir activement sur le brin considéré et d'en modifier significativement la tension avant que le brin considéré ne parvienne au point d'assemblage. Par conséquent, la mesure de la tension d'assemblage effective T_actual, qui est réalisée au plus proche du point d'assemblage, dans un tronçon d'approche peu perturbé par des forces externes, est particulièrement fiable, et bien représentative de la tension qui s'exerce réellement dans le brin concerné au moment où le brin atteint le point d'assemblage.

Selon une caractéristique préférentielle, lors de l'étape d'asservissement de tension de brin, on utilisera de préférence le dispositif d'entraînement motorisé, en particulier le dispositif d'entraînement motorisé associé au brin concerné, comme organe régulateur de tension, en ajustant, en fonction de l'erreur de tension ER_T, la consigne d'entraînement que l'on applique au dispositif d'entraînement motorisé. Avantageusement, l'utilisation d'un dispositif motorisé, permet, en fonction de l'erreur de tension ER_T mesurée, soit de ralentir le brin concerné, en amont du point d'assemblage, en appliquant au brin concerné, par l'intermédiaire du dispositif motorisé, une vitesse d'avance V_fwd suffisamment réduite, ce qui aura pour effet de retenir le brin concerné et donc d'augmenter la tension concerné, soit au contraire d'accélérer le brin concerné, en amont du point d'assemblage, c'est-à-dire d'augmenter la vitesse d'avance V_fwd du brin concerné, ce qui aura pour effet de réduire la tension du brin concerné, en « donnant du mou » au brin concerné.

Avantageusement, on pourra ainsi opérer simultanément et simplement sur chaque brin 50, 52 autant de régulations en tension, indépendantes les unes des autres.

Selon une autre caractéristique préférentielle, si, lors de l'étape d'amenée, le brin considéré, par exemple le premier brin 50, est entraîné en déplacement vers le point d'assemblage au moyen d'un dispositif d'entraînement motorisé, tel qu'un cabestan, qui est situé en amont du point d'assemblage, notamment tel que cela a été décrit plus haut, alors le procédé peut également comprendre une étape de déroulage, au cours de laquelle on déroule le brin considéré, ici par exemple le premier brin 50, à partir d'une bobine d'entrée, au moyen d'un dispositif de déroulage qui est distinct du dispositif d'entraînement motorisé du brin considéré et qui est situé en amont dudit dispositif d'entraînement motorisé. Le dispositif de déroulage comprend un porte-bobine motorisé destiné à recevoir et à entraîner en rotation, à une vitesse dite « vitesse de bobine d'entrée » ω7 choisie, la bobine d'entrée concernée. Avantageusement, on peut alors mesurer, en un second point de mesure de tension PT2 qui est situé le long du brin considéré, ici par exemple le long du premier brin 50, entre le porte-bobine motorisé et le dispositif d'entraînement motorisé, la tension dite « tension de déroulage » effective T_unwind_actual qui s'exerce dans le brin considéré, et ajuster en conséquence la vitesse de bobine d'entrée ω7 de sorte à faire converger ladite tension de déroulage effective T_unwind_actual vers une consigne de tension de déroulage T_unwind _set prédéterminée. En effet, en contrôlant d'une part, en amont, la vitesse de bobine d'entrée ω7 et donc la vitesse de déroulage à laquelle on libère le brin, et d'autre part, en aval, on peut avantageusement choisir la tension de déroulage du brin, qui règne entre le dispositif de déroulage, en amont, et le dispositif d'entraînement motorisé, en aval. Avantageusement, on procure ainsi au brin concerné, qui se présente en entrée du dispositif d'entraînement motorisé, une tension de déroulage effective T_unwind_actual bien contrôlée, qui fixe un premier palier de pré-tension, à partir duquel on va pouvoir ensuite, grâce à l'action du dispositif d'entraînement motorisé, modifier l'état de tension du brin dans le tronçon d'approche, en aval du dispositif d'entraînement motorisé et en amont du point d'assemblage, afin de conférer audit brin la tension d'assemblage effective T_actual souhaitée. On a à ce titre constaté que la création et le maintien, grâce à une double motorisation (celle du dispositif de déroulage et celle du dispositif d'entraînement motorisé), d'une pré-contrainte de tension, sous la forme d'une tension de déroulage effective T_unwind actual de valeur régulière et bien maîtrisée, permettait avantageusement d'ajuster plus précisément et plus facilement la tension d'assemblage effective T_actual du brin concerné. On notera en particulier que l'existence d'un premier palier de tension, égal à la tension de déroulage effective T_unwind_actual, permet, par une action additive (augmentation de la tension par freinage du brin) ou au contraire par une action soustractive (réduction de la tension par accélération du brin) exercée par le dispositif d'entraînement motorisé à partir de ce premier palier, d'atteindre avec précision une tension d'assemblage effective T_actual résultante, formant un second palier de tension, et qui sera librement choisie dans une très large plage de tension d'assemblage effective, dont la limite basse est inférieure (en valeur absolue) au premier palier de tension, c'est-à-dire à la tension de déroulage effective T_unwind_actual, et la limite haute est supérieure audit premier palier de tension. Plus particulièrement, l'existence d'un premier palier de tension permet de descendre, dans le second palier de tension, la tension d'assemblage (aussi bien la consigne que la tension d'assemblage effective) T_set, T_actual à un niveau très bas, par exemple de l'ordre de quelques centi-Newton (ce qui équivaut au poids d'une masse de quelque grammes) ou de quelques dizaines de centi-Newton (ce qui équivaut au poids d'une masse de quelques dizaines de grammes), sans risque de créer des à-coups de tension dans le brin, et sans risque de faire passer la tension d'assemblage effective T_actual par une valeur nulle, ce qui risquerait de faire sortir le brin des guides (poulies, galets, etc.) qui définissent le cheminement du brin à travers l'installation. En particulier, un tel procédé à deux paliers de tension, utilisant deux points de mesure de tension PT1, PT2 situés en amont du point d'assemblage, sur un même brin et distants l'un de l'autre, permet notamment d'obtenir une régulation efficace dans une plage de tension d'assemblage comprise entre T_actual = 5 cN (cinq centi-Newton) et T_actual = 100 cN (cent centi-Newton), que l'on atteint par « soustraction » à partir du premier palier de tension. A titre d'exemple, on pourra choisir pour le premier palier de tension une tension de déroulage T_unwind set (et donc obtenir une tension de déroulage effective T_unwind_actual) comprise entre 50 cN (cinquante centi-Newton) et 600 cN, et par exemple égale à 100 cN, à 200 cN, ou à 400 cN, et obtenir, au niveau du second palier de tension, une tension d'assemblage T_actual, précise et stable, qui sera parfaitement conforme à une consigne T_set que l'on aura librement choisie dans une plage possible très large, entre 15 cN (quinze centi-Newton, ce qui correspond à une masse d'environ 15 grammes) et 100 N (cent Newton, ce qui correspond à une masse d'environ dix kilogrammes), voire entre 5 cN (cinq centi-Newton ce qui correspond à une masse d'environ 5 grammes) et 200 N (deux cents Newton, ce qui correspond à une masse d'environ vingt kilogrammes).

Selon une caractéristique préférentielle, l'installation comprend une unité d'asservissement en vitesse d'avance agencée pour asservir en boucle fermée la vitesse d'avance V_fwd de chaque brin selon un mode de fonctionnement dit « mode d'asservissement en vitesse », l'unité d'asservissement en vitesse comprenant à cet effet :
- un organe de fixation de consigne de vitesse qui permet de fixer une consigne, dite « consigne de vitesse d'avance » V_fwd_set, qui correspond à une valeur de vitesse d'avance que l'on souhaite conférer à chaque brin en amont du point d'assemblage,
- un organe de surveillance de vitesse qui mesure, en un point de mesure de vitesse d'avance PV1 qui est situé le long de chaque brin et en amont du point d'assemblage, une valeur de vitesse dite « vitesse d'avance effective » V_fwd_actual qui est représentative de la vitesse d'avance effective de chaque brin au point de mesure PV1 considéré,
- un organe de rétroaction en vitesse qui évalue une erreur, dite « erreur de vitesse » ER_V, qui correspond à la différence entre la consigne de vitesse d'avance et la vitesse d'avance effective de chaque brin : ER_V = V_fwd_set - V_fwd_actual, et
- un organe régulateur de vitesse, placé sous la dépendance de l'organe de rétroaction en vitesse, et qui agit sur chaque brin en amont du point d'assemblage, de sorte à faire converger automatiquement la vitesse d'avance effective V_fwd_actual de chaque brin vers la consigne de vitesse d'avance V_fwd_set.

L'installation peut alors de préférence comporter un sélecteur qui permet d'activer sélectivement, pour chaque brin, le mode d'asservissement en tension ou le mode d'asservissement en vitesse. En d'autres termes, on offre à l'utilisateur une possibilité de sélection, pour chaque brin, entre un mode d'asservissement de chaque brin en tension, et un mode d'asservissement de chaque brin en vitesse d'avance. Le procédé pourra donc prévoir une étape de sélection correspondante. Dans ce cas, il est possible de réaliser de multiples combinaisons d'assemblage, au sein desquelles chaque brin est régulé en tension, voire plusieurs brins sont régulés en tension, tandis qu'un autre brin, voire plusieurs autres brins, sont régulés en vitesse.

On notera par ailleurs que l'asservissement en vitesse, et notamment la mesure de la vitesse d'avance effective F_fwd_actual du brin considéré, intervient de préférence à proximité du point d'assemblage, et par exemple dans le tronçon d'approche, compris entre le dernier élément motorisé qui précède le point d'assemblage et le point d'assemblage, afin que la vitesse d'avance considérée, et asservie, soit représentative de la vitesse d'avance à laquelle le brin parvient au point d'assemblage. De préférence, le point de mesure de vitesse PV1 pourra être situé au niveau du dispositif d'entraînement motorisé.

Pour des titres et des torsions données, on peut faire varier la courbe force-allongement de l'élément filaire textile, et donc notamment son module tangent, en faisant varier la tension T₁ ou la vitesse V₁ appliquée à l'âme lors de l'étape d'assemblage de son procédé de fabrication. En l'espèce, en augmentant la tension T₁ par rapport à T₂ ou en diminuant la vitesse V₁ par rapport à la vitesse V₂, on diminue le module tangent pour l'ensemble des allongements, on augmente l'allongement à rupture et on diminue la force à rupture de l'élément filaire textile. A l'inverse, en abaissant la tension T₁ par rapport à T₂ ou en augmentant la vitesse V₁ par rapport à la vitesse V₂, on augmente le module tangent pour l'ensemble des allongements, on diminue l'allongement à rupture et on augmente la force à rupture de l'élément filaire textile. En plus de faire varier le module tangent, l'augmentation de la tension T₁ par rapport à T₂ ou la diminution de la vitesse V₁ par rapport à V₂ permet d'améliorer l'endurance de l'élément filaire textile comme cela est démontré dans le test d'endurance décrit ci-dessous. En l'espèce, la vitesse V₁ appliquée au premier brin 50 de l'âme 54 est égale à 9,3 m/min. La vitesse V₂ appliquée à chaque deuxième brin 52 de la couche 58 est égale à 10,55 m/min. La tension appliquée à l'élément filaire textile écru 48 lors de l'étape d'assemblage est égale à 1200 cN.

Postérieurement aux étapes d'assemblages décrites ci-dessus, on obtient l'élément filaire de renfort écru. Le procédé de fabrication comprend alors une étape durant laquelle on revêt l'élément filaire textile de renfort écru d'une couche intermédiaire d'une première composition adhésive thermoréticulable. En l'espèce, on utilise une première composition adhésive ayant une fonction de primaire d'adhésion et comprenant une résine époxy en solution aqueuse, par exemple à base de polyglycérol polyglycidyl éther. Le procédé comprend ensuite une première étape de traitement thermique de l'élément filaire textile de renfort écru revêtu de la couche intermédiaire de façon à réticuler la première composition adhésive. On obtient alors un élément filaire textile de renfort pré-adhérisé.

Puis, le procédé comprend une deuxième étape de revêtement de l'élément filaire textile de renfort pré-adhérisé par une couche externe d'une deuxième composition adhésive thermoréticulable. En l'espèce, on utilise une composition adhésive aqueuse classique de type RFL (Résorcinol-Formaldéhyde-Latex d'élastomère(s)). Puis, le procédé comprend une deuxième étape de traitement thermique de l'élément filaire textile de renfort pré-adhérisé revêtu de la couche externe de façon à réticuler la deuxième composition adhésive. On obtient alors l'élément filaire textile de renfort adhérisé avant l'étape de fabrication de la nappe de frettage.

Pour l'élément filaire textile de renfort adhérisé 48, lors de la première étape de revêtement par et de traitement thermique de l'élément de renfort écru revêtu de la couche intermédiaire, on applique à l'élément de renfort écru revêtu de la couche intermédiaire une tension T_{T1} ici égale à 0,2 daN. Lors de la deuxième étape de revêtement par et de traitement thermique de l'élément de renfort pré-adhérisé revêtu de la couche externe, on applique à l'élément de renfort pré-adhérisé revêtu de la couche externe une tension T_{T2} ici égale à 0,2 daN.

### Procédé de fabrication du pneumatique

On fabrique le pneumatique 10 selon le procédé décrit ci-dessous.

Tout d'abord, on fabrique la nappe de travail 18 et la nappe de carcasse 34 en agençant parallèlement les uns aux autres les éléments filaires de renfort de chaque nappe et en les noyant, par exemple par calandrage, dans une composition non réticulée comprenant au moins un élastomère, la composition étant destinée à former une matrice élastomérique une fois réticulée. On obtient une nappe dite droite, dans laquelle les éléments filaires de renfort de la nappe sont parallèles les uns aux autres et sont parallèles à la direction principale de la nappe. Puis, si nécessaire, on découpe des portions de chaque nappe droite selon un angle de découpe et on aboute ces portions les unes aux autres de façon à obtenir une nappe dite à angle, dans laquelle les éléments filaires de renfort de la nappe sont parallèles les uns aux autres et forment un angle avec la direction principale de la nappe égal à l'angle de découpe.

Puis, on met en œuvre un procédé d'assemblage tel que décrit dans EP1623819 ou bien dans FR1413102.

Lors de ce procédé d'assemblage, on agence l'armature de frettage 17, ici la nappe de frettage 19, radialement à l'extérieur de l'armature de travail 16. En l'espèce, dans une première variante, on fabrique une bandelette de largeur B significativement inférieure à L_{F}, dans laquelle l'élément filaire textile de renfort adhérisé 48 est noyé dans une composition non réticulée et on enroule hélicoïdalement la bandelette sur plusieurs tours de façon à obtenir la largeur axiale L_{F}. Dans une deuxième variante, on fabrique la nappe de frettage 19 présentant une largeur L_{F} d'une façon analogue aux nappes de carcasse et de travail et on enroule sur un tour la nappe de frettage 19 sur l'armature de travail 16. Dans une troisième variante, on enroule l'élément filaire textile de renfort adhérisé 48 radialement à l'extérieur de la nappe de travail 18, puis on dépose dessus une couche d'une composition dans laquelle sera noyé l'élément filaire textile de renfort de frettage 48 lors de la cuisson du pneumatique. Dans les trois variantes, on noie l'élément filaire textile de renfort adhérisé 48 dans une composition pour former, à l'issue du procédé de fabrication du pneumatique, la nappe de frettage 19 comprenant l'élément filaire textile de renfort de frettage 48.

Après une étape de pose de la bande de roulement 20, on obtient alors le pneumatique dans lequel les compositions des matrices élastomériques ne sont pas encore réticulées et sont dans un état cru. On parle alors d'une ébauche crue du pneumatique.

Enfin, on réticule les compositions, par exemple par cuisson ou vulcanisation, afin d'obtenir le pneumatique dans lequel les compositions présentent un état réticulé. Lors de cette étape de cuisson, on expanse radialement, circonférentiellement et axialement le pneumatique dont les matrices élastomériques sont à l'état cru, par exemple par mise sous pression d'une membrane de gonflage, de façon à plaquer le pneumatique contre des surfaces d'un moule de cuisson. Cette expansion radiale et circonférentielle est ici avantageusement mise en œuvre grâce aux éléments filaires textiles de renfort adhérisés des premier et deuxième modes de réalisation.

### TESTS COMPARATIFS

### Courbe force-allongement

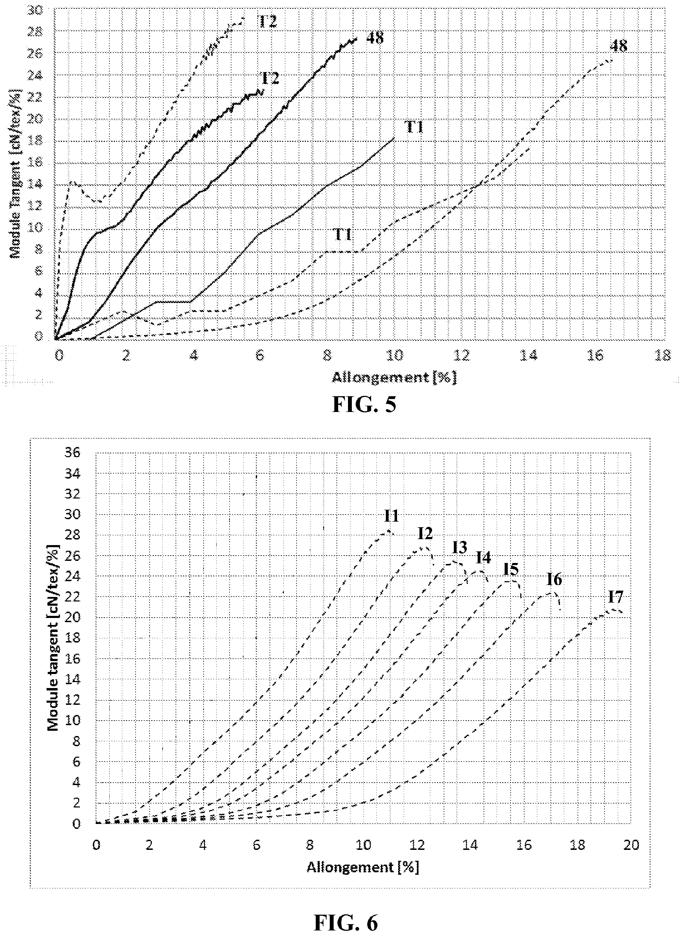

On a comparé un élément filaire textile hybride de US6799618 et désigné par la référence T1, un élément filaire textile hybride classique de WO2016/166056 et désigné par la référence T2 et l'élément filaire textile de renfort adhérisé 48 décrit ci-dessus. On a mesuré le module tangent de chacun de ces éléments filaires textiles avant l'étape de fabrication de la nappe de frettage (courbes en traits pointillés) et une fois extrait du pneumatique (courbes en traits continus). On a représenté la variation des modules tangents de ces éléments filaires textiles sur la figure 5.

En référence aux courbes en traits pointillés, on note que, avant l'étape de fabrication de la nappe de frettage, l'élément filaire textile de renfort adhérisé 48 présente, à la différence de l'élément filaire textile T2, un module tangent inférieur ou égal à 3 cN/tex/% pour tout allongement inférieur ou égal à 2 %. En l'espèce, avant l'étape de fabrication de la nappe de frettage, l'élément filaire textile de renfort adhérisé 48 présente un module tangent inférieur ou égal à 3 cN/tex/% pour tout allongement inférieur ou égal à 6 % et voire même inférieur ou égal à 7 %.

On note également que, avant l'étape de fabrication de la nappe de frettage, l'élément filaire textile de renfort adhérisé 48 présente un module tangent inférieur ou égal à 5 cN/tex/% pour tout allongement inférieur ou égal à 3 %. En l'espèce, avant l'étape de fabrication de la nappe de frettage, l'élément filaire textile de renfort adhérisé 48 présente un module tangent inférieur ou égal à 5 cN/tex/% pour tout allongement inférieur ou égal à 8,5 %.

En outre, on note que, avant l'étape de fabrication de la nappe de frettage, l'élément filaire textile de renfort adhérisé 48 présente un module tangent inférieur ou égal à 10 cN/tex/% pour tout allongement inférieur ou égal à 5 %. En l'espèce, avant l'étape de fabrication de la nappe de frettage, l'élément filaire textile de renfort adhérisé 48 présente un module tangent inférieur ou égal à 10 cN/tex/% pour tout allongement inférieur ou égal à 10 %, voire inférieur ou égal à 11 %.

En outre, on note que, avant l'étape de fabrication de la nappe de frettage, l'élément filaire textile de renfort adhérisé 48 présente un module tangent inférieur ou égal à 15 cN/tex/% pour tout allongement inférieur ou égal à 6 %. En l'espèce, avant l'étape de fabrication de la nappe de frettage, l'élément filaire textile de renfort adhérisé 48 présente un module tangent inférieur ou égal à 15 cN/tex/% pour tout allongement inférieur ou égal à 12 %.

Au contraire, l'élément filaire textile T2 présente, avant l'étape de fabrication de la nappe de frettage, un module tangent inférieur ou égal à 5 cN/tex/% pour des allongements uniquement inférieur ou égal à 0,1 %. Au-delà de 0,1 % d'allongement, le module tangent de l'élément filaire textile T2, avant l'étape de fabrication de la nappe de frettage, est supérieur à 5 cN/tex/%.

De plus, le module tangent de l'élément filaire textile T2, s'il dépasse 10 cN/tex/% pour tout allongement supérieur ou égal à 0,2 %, n'a pas de signification pour tout allongement supérieur ou égal à 6 % qui est la valeur de l'allongement à rupture de l'élément filaire textile T2. L'élément filaire textile de renfort adhérisé 48 présente, avant l'étape de fabrication de la nappe de frettage, un allongement à rupture bien plus élevé et ici supérieur ou égal à 10 %, en l'espèce supérieur ou égal à 14 %, voire supérieur ou égal à 15%, voire même supérieur ou égal à 16 %, et ici égal à 16,5 %.

En référence aux courbes en traits continus, on note que, une fois extrait du pneumatique, l'élément filaire textile de renfort de frettage 48 présente un module tangent supérieur ou égal à 5 cN/tex/% pour tout allongement supérieur ou égal à 4 %, voire supérieur ou égal à 3,5 %, voire même supérieur ou égal à 3 % et, dans l'exemple décrit supérieur ou égal à 2 %. L'élément filaire textile T1 présente, une fois extrait du pneumatique, un module tangent supérieur à 5 cN/tex/% pour des allongements uniquement supérieurs à 4,5 %.

On note également que, une fois extrait du pneumatique, l'élément filaire textile de renfort de frettage 48 présente un module tangent supérieur ou égal à 10 cN/tex/% pour tout allongement supérieur ou égal à 6 %, voire supérieur ou égal à 5 %, voire même supérieur ou égal à 4 % dans l'exemple décrit. Au contraire, l'élément filaire textile T1 présente, une fois extrait du pneumatique, un module tangent supérieur ou égal à 10 cN/tex/% pour des allongements uniquement supérieurs à 6,3 %.

L'élément filaire textile de renfort de frettage 48 présente, une fois extrait du pneumatique, un module tangent supérieur ou égal à 15 cN/tex/% pour tout allongement supérieur ou égal à 8 %, voire supérieur ou égal à 7 % et, dans l'exemple décrit, supérieur ou égal à 6 %. Au contraire, l'élément filaire textile T1 présente, une fois extrait du pneumatique, un module tangent supérieur ou égal à 15 cN/tex/% pour des allongements uniquement supérieurs à 8,6 %.

L'élément filaire textile de renfort de frettage 48 présente, une fois extrait du pneumatique, un module tangent supérieur ou égal à 20 cN/tex/% pour tout allongement supérieur ou égal à 8 %. Le module tangent de l'élément filaire textile T1, une fois extrait du pneumatique, n'atteint jamais la valeur de 20 cN/tex/%.

Enfin, on notera, qu'une fois extrait du pneumatique, l'élément filaire textile de renfort de frettage 48 présente un allongement à rupture supérieur ou égal à 6 %, de préférence supérieur ou égal à 7 % et plus préférentiellement supérieur ou égal à 8 %. L'élément filaire textile T2 présente un allongement à rupture bien inférieur, ici égal à 6 %.

De ces courbes, on constate d'une part que l'élément filaire textile de renfort de frettage 48 présente des propriétés de résistance mécanique élevées une fois extrait du pneumatique, notamment un module tangent significativement plus élevé que celui de T1, et relativement proche de celui de T2, voire même supérieur pour des allongements supérieurs à l'allongement à rupture de T2. On constate d'autre part que l'élément filaire textile de renfort adhérisé 48 présente, avant l'étape de fabrication de la nappe de frettage, un module tangent relativement faible, ici significativement plus faible que celui de T2 et inférieur à celui de T1 jusqu'à des allongements inférieurs à 12 %, permettant des déformations radiales et circonférentielles aisées du pneumatique lors de son procédé de fabrication.

### Test d'endurance

On a testé la résistance à la fatigue en compression, en d'autres termes l'endurance en compression, de l'élément filaire textile hybride classique T2 de WO2016/166056 ainsi que des éléments filaires textiles de renfort adhérisés I1 à I7 analogues à l'élément filaire textile de renfort adhérisé 48 décrit ci-dessus et tous conformes à l'invention.

Les éléments filaires textiles de renfort adhérisé I1 à I7 sont structurellement identiques à l'élément filaire textile de renfort adhérisé 48 mais sont obtenus en mettant en œuvre des procédés de fabrication différents dans lesquels la vitesse V₂ de chaque deuxième brin 54 de la couche 58 est respectivement égale à 10,34 m.min⁻¹, 10,36 m.min⁻¹, 10,42 m.min⁻¹, 10,49 m.min⁻¹, 10,55 m.min⁻¹, 10,62 m.min⁻¹ et 10,69 m.min⁻¹ pour chaque élément filaire textile I1 à I7 et la vitesse V₁ du premier brin 50 de l'âme 54 est égale à 9,3 m.min⁻¹. La tension T_{T1} est égale à 0,15 daN pour tous les éléments filaires textiles de renfort I1 à I7. La tension T_{T2} est égale à 0,15 daN pour tous les éléments filaires textiles de renfort I1 à I7. La tension appliquée à chaque élément filaire textile écru I1 à I7 lors de l'étape d'assemblage est égale à 1200 cN.

On a mesuré le module tangent de chacun de ces éléments filaires textiles adhérisés I0 à I7 avant l'étape de fabrication de la nappe de frettage (courbes en traits pointillés) et représenté la variation des modules tangents de ces éléments filaires textiles adhérisés I0 à I7 sur la figure 6.

Chaque élément filaire textile adhérisé I1 à I7 présente, avant l'étape de fabrication de la nappe de frettage, un module tangent inférieur ou égal à 5 cN/tex/% pour tout allongement inférieur ou égal à 3 %. En outre, chaque élément filaire textile adhérisé I1 à I7 présente, avant l'étape de fabrication de la nappe de frettage, un module tangent inférieur ou égal à 3 cN/tex/% pour tout allongement inférieur ou égal à 2 %. En outre, chaque élément filaire textile adhérisé I1 à I7 présente, avant l'étape de fabrication de la nappe de frettage, un module tangent inférieur ou égal à 10 cN/tex/% pour tout allongement inférieur ou égal à 5 %. Enfin, chaque élément filaire textile adhérisé I1 à I7 présente, avant l'étape de fabrication de la nappe de frettage, un module tangent inférieur ou égal à 15 cN/tex/% pour tout allongement inférieur ou égal à 6 %.

Chaque élément filaire textile de renfort adhérisé I1 à I4 présente, avant l'étape de fabrication de la nappe de frettage, un module tangent supérieur ou égal à 3 cN/tex/% pour tout allongement supérieur ou égal à 6 %. Chaque élément filaire textile de renfort adhérisé I1 à I3 présente, avant l'étape de fabrication de la nappe de frettage, un module tangent supérieur ou égal à 3 cN/tex/% pour tout allongement supérieur ou égal à 5 %. Chaque élément filaire textile de renfort adhérisé I1 et I2 présente, avant l'étape de fabrication de la nappe de frettage, un module tangent supérieur ou égal à 3 cN/tex/% pour tout allongement supérieur ou égal à 4 %. L'élément filaire textile de renfort adhérisé I1 présente, avant l'étape de fabrication de la nappe de frettage, un module tangent supérieur ou égal à 3 cN/tex/% pour tout allongement supérieur ou égal à 3 %.

Chaque élément filaire textile de renfort adhérisé I1 à I4 présente, avant l'étape de fabrication de la nappe de frettage, un module tangent supérieur ou égal à 5 cN/tex/% pour tout allongement supérieur ou égal à 7,5 %. Chaque élément filaire textile de renfort adhérisé I1 à I3 présente, avant l'étape de fabrication de la nappe de frettage, un module tangent supérieur ou égal à 5 cN/tex/% pour tout allongement supérieur ou égal à 6,5 %. Chaque élément filaire textile de renfort adhérisé I1 et I2 présente, avant l'étape de fabrication de la nappe de frettage, un module tangent supérieur ou égal à 5 cN/tex/% pour tout allongement supérieur ou égal à 5,5 %. L'élément filaire textile de renfort adhérisé I1 présente, avant l'étape de fabrication de la nappe de frettage, un module tangent supérieur ou égal à 5 cN/tex/% pour tout allongement supérieur ou égal à 4,5 %.

Chaque élément filaire textile de renfort adhérisé I1 à I4 présente, avant l'étape de fabrication de la nappe de frettage, un module tangent supérieur ou égal à 10 cN/tex/% pour tout allongement supérieur ou égal à 10 %. Chaque élément filaire textile de renfort adhérisé I1 à I3 présente, avant l'étape de fabrication de la nappe de frettage, un module tangent supérieur ou égal à 10 cN/tex/% pour tout allongement supérieur ou égal à 8,5 %. Chaque élément filaire textile de renfort adhérisé I1 et I2 présente, avant l'étape de fabrication de la nappe de frettage, un module tangent supérieur ou égal à 10 cN/tex/% pour tout allongement supérieur ou égal à 7,5 % et encore plus préférentiellement pour tout allongement supérieur ou égal à 6,5 %.

Chaque élément filaire textile de renfort adhérisé I1 à I4 présente, avant l'étape de fabrication de la nappe de frettage, un module tangent supérieur ou égal à 15 cN/tex/% pour tout allongement supérieur ou égal à 12 %, de préférence pour tout allongement supérieur ou égal à 10,5 %. Chaque élément filaire textile de renfort adhérisé I1 à I3 présente, avant l'étape de fabrication de la nappe de frettage, un module tangent supérieur ou égal à 15 cN/tex/% pour tout allongement supérieur ou égal à 9 %. Chaque élément filaire textile de renfort adhérisé I1 et I2 présente, avant l'étape de fabrication de la nappe de frettage, un module tangent supérieur ou égal à 15 cN/tex/% pour tout allongement supérieur ou égal à 7,5 %.

Chaque élément filaire textile de renfort adhérisé I1 à I7 présente, avant l'étape de fabrication de la nappe de frettage, un allongement à rupture supérieur ou égal à 10 %. Chaque élément filaire textile de renfort adhérisé I1 à I3 présente, avant l'étape de fabrication de la nappe de frettage, un allongement à rupture inférieur ou égal à 14 %. Chaque élément filaire textile de renfort adhérisé I1 et I2 présente, avant l'étape de fabrication de la nappe de frettage, un allongement à rupture inférieur ou égal de préférence inférieur ou égal à 13 %.

Chaque élément filaire textile de renfort adhérisé I5 à I7 présente, avant l'étape de fabrication de la nappe de frettage, un module tangent inférieur ou égal à 3 cN/tex/% pour tout allongement inférieur ou égal à 6 %, de préférence pour tout allongement inférieur ou égal à 7 %. Chaque élément filaire textile de renfort adhérisé I6 et I7 présente, avant l'étape de fabrication de la nappe de frettage, un module tangent inférieur ou égal à 3 cN/tex/% pour tout allongement inférieur ou égal à 8 %. L'élément filaire textile de renfort adhérisé I7 présente, avant l'étape de fabrication de la nappe de frettage, un module tangent inférieur ou égal à 3 cN/tex/% pour tout allongement inférieur ou égal à 9 %.

Chaque élément filaire textile de renfort adhérisé I5 à I7 présente, avant l'étape de fabrication de la nappe de frettage, un module tangent inférieur ou égal à 5 cN/tex/% pour tout allongement inférieur ou égal à 7,5 %. Chaque élément filaire textile de renfort adhérisé I6 et I7 présente, avant l'étape de fabrication de la nappe de frettage, un module tangent inférieur ou égal à 5 cN/tex/% pour tout allongement inférieur ou égal à 8,5 %, voire même inférieur ou égal à 9,5 %. L'élément filaire textile de renfort adhérisé I7 présente, avant l'étape de fabrication de la nappe de frettage, un module tangent inférieur ou égal à 5 cN/tex/% pour tout allongement inférieur ou égal à 10,5 %.

Chaque élément filaire textile de renfort adhérisé I5 à I7 présente, avant l'étape de fabrication de la nappe de frettage, un module tangent inférieur ou égal à 10 cN/tex/% pour tout allongement inférieur ou égal à 10 %. Chaque élément filaire textile de renfort adhérisé I6 et I7 présente, avant l'étape de fabrication de la nappe de frettage, un module tangent inférieur ou égal à 10 cN/tex/% pour tout allongement inférieur ou égal à 11 %, voire même inférieur ou égal à 12 %. L'élément filaire textile de renfort adhérisé I7 présente, avant l'étape de fabrication de la nappe de frettage, un module tangent inférieur ou égal à 10 cN/tex/% pour tout allongement inférieur ou égal à 13 %.

Chaque élément filaire textile de renfort adhérisé I5 à I7 présente, avant l'étape de fabrication de la nappe de frettage, un module tangent inférieur ou égal à 15 cN/tex/% pour tout allongement inférieur ou égal à 12 %. Chaque élément filaire textile de renfort adhérisé I6 et I7 présente, avant l'étape de fabrication de la nappe de frettage, un module tangent inférieur ou égal à 15 cN/tex/% pour tout allongement inférieur ou égal à 13 %, voire même inférieur ou égal à 14 %. L'élément filaire textile de renfort adhérisé I7 présente, avant l'étape de fabrication de la nappe de frettage, un module tangent inférieur ou égal à 15 cN/tex/% pour tout allongement inférieur ou égal à 15 %.Chaque élément filaire textile de renfort adhérisé I5 à I7 présente, avant l'étape de fabrication de la nappe de frettage, un allongement à rupture supérieur ou égal à 14 % de préférence supérieur ou égal à 15 %. Chaque élément filaire textile de renfort adhérisé I6 et I7 présente, avant l'étape de fabrication de la nappe de frettage, un allongement à rupture supérieur ou égal à 16 % et encore plus préférentiellement supérieur ou égal à 17 %.

Pour des éléments filaires textiles destinés à renforcer des pneumatiques, la résistance à la fatigue peut être analysée en soumettant ces éléments filaires textiles à divers tests de laboratoire connus, notamment au test de fatigue connu sous le nom de test « courroie » parfois nommé « Shoe Shine test », test dans lequel les éléments filaires textiles, préalablement encollés, sont incorporés dans un article élastomérique. Le principe du test « courroie » est le suivant : la courroie comprend deux couches d'éléments filaires textiles, la première couche comprenant les éléments filaires textiles dont on souhaite évaluer la performance noyés au pas de 1,25 mm dans deux skims de composition de 0,4 mm chacun et une deuxième couche de rigidification permettant d'éviter l'allongement de la première couche, cette deuxième couche comprenant des éléments filaires textiles relativement rigides et comprenant deux brins en aramide de 167 tex chacun retordus ensemble à une torsion de 315 tours par mètre et noyés au pas de 0,9 mm dans deux skims de composition de 0,3 mm chacun. L'axe de chaque élément filaire textile est orienté selon la direction longitudinale de la courroie.

On fait ensuite subir à cette courroie les sollicitations suivantes : on entraîne de façon cyclique, à l'aide d'un système bielle-manivelle, la courroie autour d'un galet de diamètre donné, ici 15 mm et 20 mm, de telle sorte que la première couche comprenant les éléments filaires textiles dont on souhaite évaluer la performance soit au contact du galet et que chaque portion élémentaire de la courroie soit soumise à une tension de 15 daN et subisse des cycles de variation de courbure qui la font passer d'un rayon de courbure infini à un rayon de courbure donné et ceci pendant 190 000 cycles, à une fréquence de 7 Hz. Cette variation de courbure de la courroie fait subir aux éléments filaires textiles de la couche intérieure, celle la plus proche du galet, un taux de compression géométrique donné selon le diamètre du galet choisi. A la fin de ces sollicitations, on extrait par décorticage les éléments filaires textiles de la couche intérieure et on mesure la force rupture résiduelle Frr des éléments filaires textiles fatigués. Préalablement, on a mesuré la force à rupture initiale Fri, valeur correspondante à la force d'un élément filaire textile extrait d'une courroie neuve non sollicitée. On calcule alors la déchéance D des éléments filaires textiles par la formule D=100x(1-Frr/Fri). Ainsi, plus D est proche de 100, moins l'élément filaire textile est endurant en compression. A l'inverse, plus D est proche de 0, plus l'élément filaire textile est endurant en compression.

On a rassemblé les résultats dans le tableau 1 ci-dessous.

**Tableau 1**

| | **V₁** | **V₂** | **T_{T1}** | **T_{T2}** | **Déchéance D -Diamètre du galet 20 mm** | **Déchéance D - Diamètre du galet 15 mm** |
|---|---|---|---|---|---|---|
| **T2** | / | / | / | / | 95 | 100 |
| **I1** | 9,3 | 10,34 | 0,15 | 0,15 | 5 | 50 |
| **I2** | 9,3 | 10,36 | 0,15 | 0,15 | 8 | 33 |
| **I3** | 9,3 | 10,42 | 0,15 | 0,15 | 9 | 32 |
| **I4** | 9,3 | 10,49 | 0,15 | 0,15 | 12 | 29 |
| **I5** | 9,3 | 10,55 | 0,15 | 0,15 | 0 | 27 |
| **I6** | 9,3 | 10,62 | 0,15 | 0,15 | 7 | 19 |
| **I7** | 9,3 | 10,69 | 0,15 | 0,15 | 3 | 21 |

A la lecture détaillée de ce tableau 1, on note que, quel que soit le diamètre du galet, les éléments filaires textiles I1 à I7 à selon l'invention présentent une déchéance largement inférieure à celle de l'élément filaire textile hybride classique T2. De plus, même le test utilisant le galet de diamètre égal à 15 mm, plus sollicitant du fait du rayon de courbure plus élevé du galet, démontre une amélioration de l'endurance des éléments filaires textiles I1 à I7 par rapport à l'élément filaire textile T2.

Enfin, on note que, pour des paramètres identiques des étapes postérieures à l'étape d'assemblage, l'endurance est d'autant plus améliorée que la courbe présente un module tangent faible et sur des allongements importants. Les inventeurs à l'origine de l'invention émettent l'hypothèse que, pour des paramètres du procédé de fabrication de l'élément filaire textile adhérisé tous égaux par ailleurs, plus on tire sur l'âme de l'élément filaire textile lors de son procédé de fabrication (en d'autres termes, plus T₁ est élevée par rapport à T₂, ou plus V₁ est petit par rapport à V₂), plus on écarte les brins de la couche par rapport à l'âme. Ainsi, les brins de la couche, en l'espèce les brins d'aramide ont une latitude géométrique importante lors de la mise en compression de l'élément filaire textile. Les brins de couches sont donc moins sensibles à la compression qu'ils peuvent plus accommoder, par exemple par la prise d'une position particulière autour de l'âme.

Bien entendu, l'invention n'est pas limitée aux modes de réalisation précédemment décrits.

## Revendications

1. Pneumatique (10) comprenant une armature de sommet (14) comprenant une armature de frettage (17) comprenant une nappe de frettage (19) comprenant au moins un élément filaire textile de renfort de frettage (48) faisant un angle strictement inférieur à 10° avec la direction circonférentielle (Z) du pneumatique (10), pneumatique (10) obtenu par un procédé comprenant une étape de fabrication de la nappe de frettage (19) dans laquelle on noie au moins un élément filaire textile de renfort adhérisé (48) dans une composition pour former le ou chaque élément filaire textile de renfort de frettage (48), **caractérisé en ce que** :
- le ou chaque élément filaire textile de renfort adhérisé (48) présente, avant l'étape de fabrication de la nappe de frettage (19), un module tangent inférieur ou égal à 5 cN/tex/% pour tout allongement inférieur ou égal à 3 %,
- le ou chaque élément filaire textile de renfort de frettage (48) présente, une fois extrait du pneumatique (10), un module tangent supérieur ou égal à 5 cN/tex/% pour tout allongement supérieur ou égal à 4%, le module tangent étant calculé à partir d'une courbe force-allongement obtenue en appliquant la norme ASTM D 885/D 885M - 10a de 2014, et
- le ou chaque élément filaire textile de renfort de frettage comprend :
- une âme (54) constituée d'un premier brin (50) comprenant au moins un monofilament, et
• - une couche (58) comprenant au moins deux deuxièmes brins (52), chaque deuxième brin (52) de la couche (58) comprenant au moins un monofilament, chaque deuxième brin (52) de la couche (58) étant enroulé en hélice autour de l'âme (54) avec chaque deuxième brin de la couche étant enroulé autour de l'âme sans être enroulé autour du ou des autres deuxièmes brins de la couche.

2. Pneumatique (10) selon la revendication précédente, dans lequel le ou chaque élément filaire textile de renfort adhérisé (48) présente, avant l'étape de fabrication de la nappe de frettage (19), un module tangent inférieur ou égal à 3 cN/tex/% pour tout allongement inférieur ou égal à 2 %.

3. Pneumatique (10) selon l'une quelconque des revendications précédentes, dans lequel le ou chaque élément filaire textile de renfort adhérisé (48) présente, avant l'étape de fabrication de la nappe de frettage (19), un module tangent inférieur ou égal à 10 cN/tex/% pour tout allongement inférieur ou égal à 5 %.

4. Pneumatique (10) selon l'une quelconque des revendications précédentes,, dans lequel le ou chaque élément filaire textile de renfort adhérisé (48) présente, avant l'étape de fabrication de la nappe de frettage (19), un module tangent inférieur ou égal à 15 cN/tex/% pour tout allongement inférieur ou égal à 6 %.

5. Pneumatique (10) selon l'une quelconque des revendications précédentes, dans lequel le ou chaque élément filaire textile de renfort de frettage (48) présente, une fois extrait du pneumatique (10), un module tangent supérieur ou égal à 5 cN/tex/% pour tout allongement supérieur ou égal à 3,5 %, de préférence supérieur ou égal à 3 % et plus préférentiellement supérieur ou égal à 2 %.

6. Pneumatique (10) selon l'une quelconque des revendications précédentes, dans lequel le ou chaque élément filaire textile de renfort de frettage (48) présente, une fois extrait du pneumatique (10), un module tangent supérieur ou égal à 10 cN/tex/% pour tout allongement supérieur ou égal à 6 %, de préférence supérieur ou égal à 5 % et plus préférentiellement supérieur ou égal à 4 %.

7. Pneumatique (10) selon l'une quelconque des revendications précédentes, dans lequel le ou chaque élément filaire textile de renfort de frettage (48) présente, une fois extrait du pneumatique (10), un module tangent supérieur ou égal à 15 cN/tex/% pour tout allongement supérieur ou égal à 8 %, de préférence supérieur ou égal à 7 % et plus préférentiellement supérieur ou égal à 6 %.

8. Pneumatique (10) selon l'une quelconque des revendications précédentes, dans lequel le ou chaque élément filaire textile de renfort de frettage (48) présente, une fois extrait du pneumatique (10), un module tangent supérieur ou égal à 20 cN/tex/% pour tout allongement supérieur ou égal à 8 %.

9. Pneumatique (10) selon l'une quelconque des revendications précédentes , dans lequel le ou les monofilaments du premier brin (50) est ou sont réalisés dans un matériau choisi parmi les polyesters, les polyamides aliphatiques, les celluloses et les mélanges de monofilaments de ces matériaux, de préférence réalisés dans un matériau choisi parmi les polyamides aliphatiques et plus préférentiellement réalisés en nylon 6.6.

10. Pneumatique (10) selon l'une quelconque des revendications précédentes , dans lequel le ou les monofilaments de chaque deuxième brin (52) est ou sont réalisés dans un matériau choisi parmi les polyamides aromatiques, les copolyamides aromatiques, les polycétones et les mélanges de monofilaments de ces matériaux, de préférence réalisés dans un matériau choisi parmi les polyamides aromatiques et plus préférentiellement réalisés en para-aramide.

11. Pneumatique (10) selon l'une quelconque des revendications précédentes, dans lequel la couche (58) est constituée de trois ou quatre deuxièmes brins (52), de préférence trois deuxièmes brins (52).

12. Pneumatique (10) selon l'une quelconque des revendications précédentes, dans lequel le facteur de torsion du premier brin (50) de l'âme (54) va de 60 à 80, de préférence de 65 à 75, le facteur de torsion d'un brin étant égal à R × (T/(1000 × ρ))^{(1/2)}, relation dans laquelle R est la torsion du brin en tours par mètre avant son assemblage au sein de l'élément filaire textile de renfort de frettage, T le titre du brin en tex et ρ la densité du matériau constitutif du ou des monofilaments du brin.

13. Pneumatique (10) selon l'une quelconque des revendications précédentes, dans lequel le facteur de torsion de chaque deuxième brin (52) de la couche (58) va de 90 à 120, de préférence de 100 à 115, le facteur de torsion d'un brin étant égal à R × (T/(1000 × ρ))^{(1/2)}, relation dans laquelle R est la torsion du brin en tours par mètre avant son assemblage au sein de l'élément filaire textile de renfort de frettage, T le titre du brin en tex et ρ la densité du matériau constitutif du ou des monofilaments du brin.

14. Pneumatique (10) selon l'une quelconque des revendications précédentes, dans lequel le facteur de torsion de l'élément filaire textile de renfort de frettage (48) va de 170 à 220, de préférence de 180 à 210, le facteur de torsion d'un élément filaire textile étant égal à R' × (T'/(1000 × ρ))^{(1/2)} , relation dans laquelle R' est la torsion de l'élément filaire textile en tours par mètre, T' le titre de l'élément filaire textile en tex et ρ la densité du matériau constitutif du ou des monofilaments de l'élément filaire textile.

## Patentansprüche

1. Luftreifen (10), der eine Scheitelbewehrung (14) umfasst, die eine Umreifungsbewehrung (17) umfasst, die eine Umreifungslage (19) umfasst, die mindestens ein textiles fadenförmiges Umreifungsverstärkungselement (48) umfasst, das einen Winkel von strikt kleiner als 10° mit der Umfangsrichtung (Z) des Luftreifens (10) bildet, wobei der Luftreifen (10) mit einem Verfahren erhalten wird, das einen Schritt des Fertigens der Umreifungslage (19) umfasst, bei dem mindestens ein haftend gemachtes textiles fadenförmiges Verstärkungselement (48) in eine Zusammensetzung eingebettet wird, um das oder jedes textile fadenförmige Umreifungsverstärkungselement (48) zu bilden, **dadurch gekennzeichnet, dass**:
- das oder jedes haftend gemachte textile fadenförmige Verstärkungselement (48), vor dem Schritt des Fertigens der Umreifungslage (19), einen Tangentenmodul kleiner oder gleich 5 cN/tex/% bei jeder Dehnung kleiner oder gleich 3 % aufweist,
- das oder jedes textile fadenförmige Umreifungsverstärkungselement (48), nach dem Entnehmen aus dem Luftreifen (10), einen Tangentenmodul größer oder gleich 5 cN/tex/% bei jeder Dehnung größer oder gleich 4 % aufweist, wobei der Tangentenmodul anhand einer Kraft-Dehnungs-Kurve unter Anwendung der Norm ASTM D 885/D 885M - 10a von 2014 berechnet wird, und
- das oder jedes textile fadenförmige Umreifungsverstärkungselement umfasst:
- eine Seele (54), die aus einem ersten Faden (50) besteht, der mindestens ein Monofilament umfasst, und
- eine Schicht (58), die mindestens zwei zweite Fäden (52) umfasst, wobei jeder zweite Faden (52) der Schicht (58) mindestens ein Monofilament umfasst, wobei jeder zweite Faden (52) der Schicht (58) wendelförmig um die Seele (54) gewickelt ist, wobei jeder zweite Faden der Schicht um die Seele gewickelt ist, ohne um den oder die anderen zweiten Fäden der Schicht gewickelt zu sein.

2. Luftreifen (10) nach dem vorhergehenden Anspruch, bei dem das oder jedes haftend gemachte textile fadenförmige Verstärkungselement (48), vor dem Schritt des Fertigens der Umreifungslage (19), einen Tangentenmodul kleiner oder gleich 3 cN/tex/% bei jeder Dehnung kleiner oder gleich 2 % aufweist.

3. Luftreifen (10) nach einem der vorhergehenden Ansprüche, bei dem das oder jedes haftend gemachte textile fadenförmige Verstärkungselement (48), vor dem Schritt des Fertigens der Umreifungslage (19), einen Tangentenmodul kleiner oder gleich 10 cN/tex/% bei jeder Dehnung kleiner oder gleich 5 % aufweist.

4. Luftreifen (10) nach einem der vorhergehenden Ansprüche, bei dem das oder jedes haftend gemachte textile fadenförmige Verstärkungselement (48), vor dem Schritt des Fertigens der Umreifungslage (19), einen Tangentenmodul kleiner oder gleich 15 cN/tex/% bei jeder Dehnung kleiner oder gleich 6 % aufweist.

5. Luftreifen (10) nach einem der vorhergehenden Ansprüche, bei dem das oder jedes textile fadenförmige Umreifungsverstärkungselement (48), nach dem Entnehmen aus dem Luftreifen (10), einen Tangentenmodul größer oder gleich 5 cN/tex/% bei jeder Dehnung größer oder gleich 3,5 %, bevorzugt größer oder gleich 3 % und noch bevorzugter größer oder gleich 2 % aufweist.

6. Luftreifen (10) nach einem der vorhergehenden Ansprüche, bei dem das oder jedes textile fadenförmige Umreifungsverstärkungselement (48), nach dem Entnehmen aus dem Luftreifen (10), einen Tangentenmodul größer oder gleich 10 cN/tex/% bei jeder Dehnung größer oder gleich 6 %, bevorzugt größer oder gleich 5 % und noch bevorzugter größer oder gleich 4 % aufweist.

7. Luftreifen (10) nach einem der vorhergehenden Ansprüche, bei dem das oder jedes textile fadenförmige Umreifungsverstärkungselement (48), nach dem Entnehmen aus dem Luftreifen (10), einen Tangentenmodul größer oder gleich 15 cN/tex/% bei jeder Dehnung größer oder gleich 8 %, bevorzugt größer oder gleich 7 % und noch bevorzugter größer oder gleich 6 % aufweist.

8. Luftreifen (10) nach einem der vorhergehenden Ansprüche, bei dem das oder jedes textile fadenförmige Umreifungsverstärkungselement (48), nach dem Entnehmen aus dem Luftreifen (10), einen Tangentenmodul größer oder gleich 20 cN/tex/% bei jeder Dehnung größer oder gleich 8 % aufweist.

9. Luftreifen (10) nach einem der vorhergehenden Ansprüche, bei dem das oder die Monofilamente des ersten Fadens (50) aus einem Material ausgeführt ist oder sind, das unter den Polyestern, den aliphatischen Polyamiden, den Cellulosen und den Mischungen aus Monofilamenten dieser Materialien gewählt ist, bevorzugt aus einem Material ausgeführt sind, das unter den aliphatischen Polyamiden gewählt ist, und noch bevorzugter aus Nylon 6.6 ausgeführt sind.

10. Luftreifen (10) nach einem der vorhergehenden Ansprüche, bei dem das oder die Monofilamente jedes zweiten Fadens (52) aus einem Material ausgeführt ist oder sind, das unter den aromatischen Polyamiden, den aromatischen Copolyamiden, den Polyketonen und den Mischungen aus Monofilamenten dieser Materialien gewählt ist, bevorzugt aus einem Material ausgeführt sind, das unter den aromatischen Polyamiden gewählt ist, und noch bevorzugter aus Para-Aramid ausgeführt sind.

11. Luftreifen (10) nach einem der vorhergehenden Ansprüche, bei dem die Schicht (58) aus drei oder vier zweiten Fäden (52) besteht, bevorzugt aus drei zweiten Fäden (52).

12. Luftreifen (10) nach einem der vorhergehenden Ansprüche, bei dem der Zwirnfaktor des ersten Fadens (50) der Seele (54) zwischen 60 und 80, bevorzugt zwischen 65 und 75 liegt, wobei der Zwirnfaktor eines Fadens gleich R × (T/ (1000 × ρ))^{(1/2)} ist, wobei in der Gleichung R die Verzwirnung des Fadens in Drehungen pro Meter vor seinem Zusammenfügen in dem textilen fadenförmigen Umreifungsverstärkungselement, T der Titer des Fadens in tex und p die Dichte des Materials, aus dem das oder die Monofilamente des Fadens bestehen, ist.

13. Luftreifen (10) nach einem der vorhergehenden Ansprüche, bei dem der Zwirnfaktor jedes zweiten Fadens (52) der Schicht (58) zwischen 90 und 120, bevorzugt zwischen 100 und 115 liegt, wobei der Zwirnfaktor eines Fadens gleich R × (T/ (1000 × ρ))^{(1/2)} ist, wobei in der Gleichung R die Verzwirnung des Fadens in Drehungen pro Meter vor seinem Zusammenfügen in dem textilen fadenförmigen Umreifungsverstärkungselement, T der Titer des Fadens in tex und p die Dichte des Materials, aus dem das oder die Monofilamente des Fadens bestehen, ist.

14. Luftreifen (10) nach einem der vorhergehenden Ansprüche, bei dem der Zwirnfaktor des textilen fadenförmigen Umreifungsverstärkungselements (48) zwischen 170 und 220, bevorzugt zwischen 180 und 210 liegt, wobei der Zwirnfaktor eines textilen fadenförmigen Elements gleich R' × (T'/(1000 × ρ))^{(1/2)} ist, wobei in der Gleichung R' die Verzwirnung des textilen fadenförmigen Elements in Drehungen pro Meter, T' der Titer des textilen fadenförmigen Elements in tex und ρ die Dichte des Materials, aus dem das oder die Monofilamente des textilen fadenförmigen Elements bestehen, ist.

## Claims

1. Tyre (10) comprising a crown reinforcement (14) comprising a hooping reinforcement (17) comprising a hooping ply (19) comprising at least one textile wire-like hoop reinforcer element (48) making an angle strictly less than 10° with the circumferential direction (Z) of the tyre (10), the tyre (10) being obtained by a method comprising a step of production of the hooping ply (19) in which at least one bonded textile wire-like reinforcing element (48) is embedded in a compound to form the or each textile wire-like hoop reinforcer element (48), **characterized in that:**
- the or each bonded textile wire-like reinforcer element (48) has, before the step of production of the hooping ply (19), a tangent modulus less than or equal to 5 cN/tex/% for any elongation less than or equal to 3%,
- the or each textile wire-like hoop reinforcer element (48) has, once extracted from the tyre (10), a tangent modulus greater than or equal to 5 cN/tex/% for any elongation greater than or equal to 4%, the tangent modulus is calculated from a force-elongation curve obtained by applying the standard ASTM D 885/D 885M - 10a of 2014, and
- the or each textile wire-like hoop reinforcer element (48) comprises :
- a core (54) composed of a first strand (50) comprising at least one monofilament, and
- a layer (58) comprising at least two second strands (52), each second strand (52) of the layer (58) comprising at least one monofilament, each second strand (52) of the layer (58) being helically wound around the core (54) which is wound around the core without being wound around the other second strand or strands of the layer.

2. Tyre (10) according to the preceding claim, wherein the or each bonded textile wire-like reinforcer element (48) has, before the step of production of the hooping ply (19), a tangent modulus less than or equal to 3 cN/tex/% for any elongation less than or equal to 2%.

3. Tyre (10) according to either one of the preceding claims, wherein the or each bonded textile wire-like reinforcer element (48) has, before the step of production of the hooping ply (19), a tangent modulus less than or equal to 10 cN/tex/% for any elongation less than or equal to 5%.

4. Tyre (10) according to any one of the preceding claims, wherein the or each bonded textile wire-like reinforcer element (48) has, before the step of production of the hooping ply (19), a tangent modulus less than or equal to 15 cN/tex/% for any elongation less than or equal to 6%.

5. Tyre (10) according to any one of the preceding claims, wherein the or each textile wire-like hoop reinforcer element (48) has, once extracted from a tyre (10), a tangent modulus greater than or equal to 5 cN/tex/% for any elongation greater than or equal to 3.5%, preferably greater than or equal to 3% and more preferentially greater than or equal to 2%.

6. Tyre (10) according to any one of the preceding claims, wherein the or each textile wire-like hoop reinforcer element (48) has, once extracted from the tyre (10), a tangent modulus greater than or equal to 10 cN/tex/% for any elongation greater than or equal to 6%, preferably greater than or equal to 5% and more preferentially greater than or equal to 4%.

7. Tyre (10) according to any one of the preceding claims, wherein the or each textile wire-like hoop reinforcer element (48) has, once extracted from the tyre (10), a tangent modulus greater than or equal to 15 cN/tex/% for any elongation greater than or equal to 8%, preferably greater than or equal to 7% and more preferentially greater than or equal to 6%.

8. Tyre (10) according to any one of the preceding claims, wherein the or each textile wire-like hoop reinforcer element (48) has, once extracted from the tyre (10), a tangent modulus greater than or equal to 20 cN/tex/% for any elongation greater than or equal to 8%.

9. Tyre (10) according to any one of the preceding claims, wherein the monofilament or monofilaments of the first strand (50) is or are produced in a material chosen from among the polyesters, the aliphatic polyamides, the celluloses and the mixers of monofilaments of these materials, preferably produced from a material chosen from among the aliphatic polyamides and more preferentially made of nylon 6.6.

10. Tyre (10) according to to any one of the preceding claims, wherein the monofilament or monofilaments of each second strand (52) is or are produced from a material chosen from among the aromatic polyamides, the aromatic copolyamides, the polyketones and the mixers of monofilaments of these materials, preferably produced from a material chosen from among the aromatic polyamides and more preferentially made of para-aramid.

11. Tyre (10) according to to any one of the preceding claims, wherein the layer (58) is composed of three or four second strands (52), preferably three second strands (52).

12. Tyre (10) according to to any one of the preceding claims, wherein the twist factor of the first strand (50) of the core (54) goes from 60 to 80, preferably from 65 to 75, the twist factor of a strand is equal to R x (T/(1000 x ρ))^(1/2), a relationship in which R is the twist of the strand in turns per metre before its assembly within the textile wire-like hoop reinforcer element, T is the count of the strand in tex and ρ is the density of the constituent material of the monofilament or monofilaments of the strand.

13. Tyre (10) according to to any one of the preceding claims, wherein the twist factor of each second strand (52) of the layer (58) goes from 90 to 120, preferably from 100 to 115, the twist factor of a strand is equal to R x (T/(1000 x ρ))^(1/2), a relationship in which R is the twist of the strand in turns per metre before its assembly within the textile wire-like hoop reinforcer element, T is the count of the strand in tex and ρ is the density of the constituent material of the monofilament or monofilaments of the strand.

14. Tyre (10) according to to any one of the preceding claims, wherein the twist factor of the textile wire-like hoop reinforcer element (48) goes from 170 to 220, preferably from 180 to 210, the twist factor of a strand is equal to R x (T/(1000 x ρ))^(1/2), a relationship in which R is the twist of the strand in turns per metre before its assembly within the textile wire-like hoop reinforcer element, T is the count of the strand in tex and ρ is the density of the constituent material of the monofilament or monofilaments of the strand.
